# EUROPEAN PATENT APPLICATION

(11) **EP 2 636 560 A1**
(43) Date of publication of application: **11.09.2013**
(21) Application number: 11837990.8
(22) Date of filing: 31.10.2011
(51) Int. Cl.: B60Q 1/00

(54) **HEADLIGHT CONTROL DEVICE**

(30) Priority: 15.02.2011 JP 2011029935; 01.11.2010 JP 2010245326
(71) Applicant: ADC Technology Inc., Aichi 460-0003 (JP)
(72) Inventor: ADACHI, Tsutomu, Nagoya-shi Aichi 460-0003 (JP); HAYASHI, Shigeru, Nagoya-shi Aichi 460-0003 (JP); MOURI, Daisuke, Seto-shi Aichi 489-0924 (JP); NOZAWA, Takeo, Kariya-shi Aichi 448-0832 (JP); KONDO, Takezumi, Inabe-gun Mie 511-0257 (JP); KURODA, Tatsumi, Yokkaichi-shi Mie 512-1104 (JP); KAWANISHI, Tsuyoshi, Nagoya-shi Aichi 460-0003 (JP); MAEKAWA, Hiroshi, Nagoya-shi Aichi 460-0003 (JP)
(74) Representative: Seemann & Partner
(86) International application number: PCT/JP2011/075102
(87) International publication number: WO 2012/060340

(57) **Abstract**

A headlamp control apparatus is an apparatus for controlling a headlamp that can irradiate light ahead of a vehicle equipped with the apparatus and change a color of the light. The apparatus includes a color control unit that makes a color switching request to switch the color of the light emitted from the headlamp.

## Description

### CROSS-REFERENCE TO RELATED APPLICATIONS

This international application claims the benefit of Japanese Patent Application No. 2010-245326 filed November 1, 2010 and No. 2011-29935 filed February 15, 2011 in the Japan Patent Office, and the entire disclosures of which are incorporated herein by reference.

### TECHNICAL FIELD

The present invention relates to a headlamp control apparatus for switching colors of light emitted from a headlamp of a vehicle such as an automobile, motorcycle, bicycle, train, etc.

### BACKGROUND ART

In recent years, various driving assist systems that assist driving of an automobile have been proposed. Known as one of such driving assist systems is a system that assists driver's driving by controlling a headlamp according to situations around one's own vehicle.

Specifically, Patent Document 1 describes a headlamp apparatus that, upon detecting an obstacle ahead of an automobile equipped with the apparatus, adjusts brightness, irradiation direction and irradiation range of a headlamp to increase the brightness around the detected obstacle. Further, Patent Document 2 describes a control apparatus that controls lighting intensity and irradiation distance of a headlamp according to brightness around an automobile equipped with the apparatus.

### RELATED ART DOCUMENTS

### PATENT DOCUMENTS

Patent Document 1: Japanese Unexamined Patent Application Publication No. 7-137574
Patent Document 2: Japanese Unexamined Patent Application Publication No. 2009-018804

### SUMMARY OF THE INVENTION

### PROBLEMS TO BE SOLVED BY THE INVENTION

Controlling the headlamp of one's own vehicle by such apparatus allows a driver to more reliably recognize the obstacle ahead of one's own vehicle, and thereby to improve visibility of the driver. However, it is feared that changing the brightness and irradiation direction of the headlamp may dazzle pedestrians, drivers of other vehicles or the like, around one's own vehicle.

The present invention has been made in view of the above problems, and an object thereof is to provide a headlamp control apparatus that can assist driving without dazzling those who are near one's own vehicle.

### MEANS FOR SOLVING THE PROBLEMS

In a first aspect of the present invention which has been made in view of the above problems, a headlamp control apparatus is provided which controls a headlamp that emits light ahead of one's own vehicle and can change a color of the light. The headlamp control apparatus includes a color control unit that makes a color switching request to switch the color of the light emitted from the headlamp.

It should be noted that a vehicle means an automobile, motorcycle, bicycle, train, etc.
According to a configuration described above, the color of the headlamp can be switched according to a situation around one's own vehicle, a state of one's own vehicle and the like. It is possible to improve visibility ahead of one's own vehicle, accentuate presence of one's own vehicle, warn a driver, and so on. Therefore, without dazzling those who are around one's own vehicle, such as drivers of other vehicles, pedestrians, etc., driving can be assisted.

Further, as the driving assist system described above, a driving control apparatus that detects a state of a surface of a road that an automobile equipped with the apparatus is traveling, and steering operation, of one's own vehicle has been proposed in Japanese Unexamined Patent Application Publication No. 2010-146209. The driving control apparatus is configured such that a driver is considered drowsy when steering in accordance with irregularities, etc. of the road has not been performed, and warning is given to awaken the driver.

It is believed that use of such driving control apparatus allows accurate detection of the driver's drowsiness, and can inhibit drowsy driving. However, the warning to awaken the driver is not given unless the driver is so severely drowsy that the steering operation is affected. There is a risk that the driver cannot be awakened before the driver loses steering control by drowsiness.

Therefore, in the headlamp control apparatus according to a second aspect of the present invention, the color control unit executes a periodic color switching process in which the color switching request is made each time a predetermined time elapses.
According to such configuration, it is possible to stimulate eyes of the driver continuously during driving of one's own vehicle, by changing the color of the headlamp periodically. The driver, even if drowsy, can be awakened at an early stage.

In addition, it is also believed that effect as below can be obtained. That is, when an object is irradiated with the light of the headlamp, it is assumed that visibility of the object will be different depending on combination of the color, material, etc. of the object and the color of the light. According to such configuration, however, since the color of the light of the headlamp periodically changes, it is possible to generate a timing at which visibility of the object is improved regardless of the color, etc. of the object.

Thus, for example, one cycle may be set to be several seconds at the longest. Then, a plurality of colors are defined as setting colors to perform the periodic color switching process so that all the setting colors are selected in each cycle. Thereby, the timing at which visibility of the object is improved may arrive in a short cycle. Accordingly, even when a plurality of objects with different colors, etc. are present ahead of one's own vehicle, visibility of these objects is improved substantially simultaneously. It is possible to improve whole visibility ahead of one's own vehicle.

In addition, it is desirable that a cycle to switch the color of the headlamp is equal to or more than five minutes (third aspect of the present invention). By switching the color of the headlamp in such cycle, it is considered that moderate stimulus can be applied to the driver.

In addition, the headlamp may be provided at least one at each end in a vehicle width direction in front of one's own vehicle. The color control unit may execute the periodic color switching process individually for the headlamp provided at the each end (fourth aspect of the present invention).

In this way, it is possible to switch the color of each headlamp provided at each of right and left ends of the front of one's own vehicle periodically in a state in which the color of each headlamp is different, and to switch the color in an individual cycle. A stronger stimulus can be applied to the driver.

Further, as one of the above-described driving assist system, Japanese Unexamined Patent Application Publication No. 11-183610 describes an on-vehicle radar device that is equipped with an automobile and measures a distance from a preceding vehicle traveling ahead of the vehicle. The on-vehicle radar device is configured to automatically set a minimum of an inter-vehicle distance in accordance with current weather and gives warning to the driver when a measured distance falls below the minimum.

Use of such on-vehicle radar device allows the driver to take an appropriate distance from the preceding vehicle depending on the weather. More secure driving can be performed. However, for example, in a case of heavy rain, snow or the like, visibility becomes poor. Even if the headlamp is lit, it is difficult to see the surrounding. Recognition of one's own vehicle by the preceding vehicle becomes difficult. Therefore, even if driving is performed with a proper inter-vehicle distance, a risk of accidents to occur becomes high.

Therefore, the headlamp control apparatus according to a fifth aspect of the present invention further includes a weather determining unit that determines weather based on signals from a weather sensor provided in the apparatus. The color control unit executes a weather color switching process in which a color switching request is made to switch the color of the light of the headlamp to a corresponding color that corresponds to current weather determined by the weather determining unit.

In this way, the color of the headlamp can be automatically switched to the color (corresponding color) corresponding to the weather. Therefore, by appropriately setting the corresponding color to each weather, it is possible, without bothering the driver, to improve visibility of the driver and to make one's own vehicle stand out so that pedestrians and drivers of other vehicles can be easily aware of presence of one's own vehicle, in a case where the weather is worsened. Therefore, the driver can more safely drive when the weather is deteriorated or the like.

The above-mentioned weather determining unit may determine the weather in further consideration of an operating state of a removal device that removes raindrops attached to a window of one's own vehicle (sixth aspect of the present invention).
In this way, it is possible to more accurately determine the weather.

Moreover, in order to properly set the color of the headlamp in accordance with the weather, the headlamp control unit may be also configured as follows.
That is, the headlamp control apparatus according to a seventh aspect of the present invention may further include a command receiving unit that receives a command from a user. The color control unit, in accordance with the command received from the user via the command receiving unit, may execute a color setting process in which the color of the headlamp is switched each time a predetermined time elapses. The headlamp control apparatus may further include a setting unit that sets the current color of the headlamp to the corresponding color that corresponds to current weather determined by the weather determining unit, in accordance with the command received from the user via the command receiving unit, during execution of the color setting process.

In this way, the driver can easily set a color that provides best visibility or is most prominent in the weather, as the corresponding color of the headlamp in the current weather.
In addition, the headlamp may be provided at least one at each end in a vehicle width direction in front of one's own vehicle, and the corresponding color different from each other may be individually set to the headlamp provided at the each end (eleventh aspect of the present invention). In this way, the color of the light of the headlamp provided at the each end may be varied. In a case where the weather is worsened or the like, vision of the driver can be further improved and one's own vehicle can be made more evident. Further, recognition of a vehicle width of one's own vehicle can be facilitated.

As already described, Patent Document 2 describes the control apparatus that controls lighting intensity and irradiation distance of a headlamp in accordance with brightness around the automobile equipped with the apparatus. According to such control apparatus, ON/OFF and brightness adjustment of the headlamp can be automatically performed depending on time zones such as day, evening, night, and so on. Therefore, it is possible, without bothering the driver, to provide the driver a better view and highlight presence of one's own vehicle. Safer driving can be achieved.

However, as already mentioned, by lighting up the headlamp, there is a possibility that those who are around one's own vehicle may be dazzled. Also, for example, when the sunrise or the sunset grows, etc., redness is produced in a space around one's own vehicle. Even if brightness of the headlamp is merely enhanced, the view of the driver cannot be fully satisfactory, and presence of one's own vehicle is not sufficiently highlighted in some cases.

Therefore, the headlamp control apparatus according to an eighth aspect of the present invention further includes a time zone determining unit that determines a current time zone by a clock function provided in the apparatus. The color control unit executes a time zone color switching process in which the color switching request is made to switch the light of the headlamp to a corresponding color that corresponds to the current time zone determined by the time zone determining unit.

Further, the headlamp control apparatus according to a ninth aspect of the present invention further includes an illuminance detecting unit and a time zone determining unit. The illuminance detecting unit detects brightness around one's own vehicle by an illuminance sensor provided in the apparatus. The time zone determining unit determines a current time zone based on the brightness around one's own vehicle detected by the illuminance detecting unit. The color control unit executes a time zone color switching process in which the color switching request is made to switch the light of the headlamp to a corresponding color that corresponds to the current time zone determined by the time zone determining unit.

In this way, the color of the headlamp can be automatically switched to the color (corresponding color) corresponding to the time zone. Therefore, by appropriately setting the corresponding color to each time zone, without bothering the driver and dazzling those who are around one's own vehicle, it is possible to improve vision of the driver, and make one's own vehicle stand out so that pedestrians and drivers of other vehicles are easily aware of presence of one's own vehicle in the time zone, such as morning, evening, immediately after the sunset, etc. Therefore, the driver can drive more safely in the time zone, such as morning, evening, immediately after the sunset and so on.

Moreover, in order to properly set the color of the headlamp according to the time zone, the headlamp control apparatus may also be configured as follows.
That is, the headlamp control apparatus according to a tenth aspect of the present invention may further include a command receiving unit that receives a command from a user. The color control unit, in accordance with the command received from the user via the command receiving unit, may execute a color setting process in which the color of the light of the headlamp is switched each time a predetermined time elapses. The headlamp control apparatus may further include a setting unit that sets the current color of the headlamp as the corresponding color that corresponds to the current time zone, in accordance with the command received from the user via the command receiving unit during execution of the color setting process.

In this way, the driver can easily set the color of the headlamp that provides a best vision, or a color most prominent in the current time zone, as the corresponding color of the headlamp in the current time zone.

Furthermore, the headlamp may be provided at least one at each end in a vehicle width direction in front of one's own vehicle, and the corresponding color different from each other may be individually set to the headlamp provided at the each end (eleventh aspect of the present invention). In this way, the color of the light of the headlamp provided at the each end may be varied. Therefore, in the time zone such as morning, evening, immediately after sunset, etc., it is possible to further improve vision of the driver, and to make one's own vehicle more evident. Further, recognition of a vehicle width of one's own vehicle can be facilitated.

Further, as one of the driving assist system described above, Patent Document 2 describes a control apparatus equipped with an automobile that weakens lighting intensity of a headlamp when a vehicle traveling an opposite lane or a passing vehicle is detected.

According to such control apparatus, dazzling drivers of vehicles traveling the opposite lane, etc. can be inhibited. However, visibility of one's own vehicle for the drivers of vehicles traveling the opposite lane, etc. may be worsened. There is a possibility that the drivers of vehicles traveling the opposite lane do not notice one's own vehicle.

Therefore, the headlamp control apparatus according to a twelfth aspect of the present invention further includes a color detecting unit that detects a color of oncoming vehicle illumination light emitted from an oncoming vehicle of one's own vehicle. The color control unit executes an oncoming vehicle color switching process in which the color switching request is made to switch the color of the light of the headlamp to a different color from the color of the oncoming vehicle illumination light detected by the color detecting unit.

It should be noted that an oncoming vehicle refers to other vehicle that passes one's own vehicle.
In this way, it is possible to differentiate the colors of the headlamps of the two vehicles passing each other. Thus, the driver of each vehicle is likely to notice presence of the headlamp illuminated from the other vehicle. Accordingly, even if lighting intensity of the headlamp is low, the driver of each vehicle can be inhibited from overlooking the other vehicle.

In addition, the color switching request made in the oncoming vehicle color switching process when the headlamp is provided at least one at each end in a vehicle width direction in front of one's own vehicle may be a request to switch the color of light of the headlamps to a different color from the color of the oncoming vehicle illumination light, in a state in which the color of the light of the headlamp provided at the each end is different from each other (thirteenth aspect of the present invention). In this way, the color of the light of the headlamp provided at each end is in a different state. Therefore, the driver of each vehicle of one's own vehicle and the oncoming vehicle can easily notice presence of other vehicles. Further, it becomes easy to sense the vehicle width of one's own vehicle.

When giving warning to those who are around one's own vehicle during driving of an automobile or a motorcycle, a horn is generally used. However, when there is severe noise, etc., it is difficult to hear a warning sound. Sufficient warning is unable to be given.

Therefore, in Japanese Unexamined Patent Application Publication No. 9-180079, a warning device has been proposed which switches the headlamp from low beam to high beam, simultaneously with beeping of a horn. According to such warning device, it is possible to give warning to those who are around one's own vehicle through both hearing and seeing. Warning can be reliably given regardless of noise. On the other hand, there is a possibility that such warning may dazzle those who are around one's own vehicle.

Therefore, the headlamp control apparatus according to a fourteenth aspect of the present invention further includes a beep command detecting unit that detects that a command to sound a warning alarm has been given. The color control unit executes a warning alarm color switching process in which the color switching request is made in accordance with detection of the beep command by the beep command detecting unit.

In this way, without dazzling those who are around one's own vehicle, warning can be reliably given through both hearing and seeing.
For example, when visibility is poor, such as at bad weather, at night or the like, it is difficult to sense a speed and an acceleration state of a traveling automobile from outside the vehicle. There is a high risk of accidents.

Japanese Utility Model Registration No. 3124140 describes a lighting system that lights an indicator lamp of an automobile equipped with the system, in accordance with operation of an accelerator. According to such lighting system, it is possible to determine the operating state of the accelerator of one's own vehicle from a lighting state of the indicator lamp. Even if visibility is poor, etc., it is easy to sense the speed and the acceleration state of one's own vehicle from outside the vehicle.

However, if a new dedicated indicator lamp that lights up in response to the operation of the accelerator is provided upon installment of the above-described lighting system, it is feared that manufacturing cost may increase and appearance may be deteriorated. Further, if lighting devices, such as a headlamp, a directional indicator and the like, which are traditionally equipped with an automobile are lit in response to the operation of the accelerator, these lighting devices are used in a way different from the original way of use and will not be able to sufficiently play the original roles of the lighting devices.

Therefore, the headlamp control apparatus according to a fifteenth aspect of the present invention further includes an operating state detecting unit that detects an operating state of an operating unit that accepts an operation to increase a speed of one's own vehicle. The color control unit executes an operating state color switching process in which the color switching request is made to switch the color of the light of the headlamp to a color corresponding to the operating state detected by the operating state detecting unit.

In this way, there is no necessity to provide a dedicated indicator lamp. Also, without inhibiting the original function of the headlamp, that is, illuminating ahead of one's own vehicle, the operating state of such as an accelerator can be determined from the color of the headlamp. In addition, it is easy to sense the speed and the acceleration state of one's own vehicle even from outside.

In the meantime, an electric vehicle that is driven by a motor is known. Japanese Unexamined Patent Application Publication No. 2003-209901 describes, as a remaining battery notification method in an electric vehicle, giving warning about shortage of the remaining battery by an indicator lamp or the like provided in an instrument panel of the electric vehicle upon termination of driving.

Giving warning about shortage of the remaining battery at such timing can prompt a driver to charge the battery more effectively. However, when the driver is not accustomed to driving of the electric vehicle, the driver may miss the warning about the shortage of the remaining battery.

Therefore, in a sixteenth aspect of the present invention, one's own vehicle is driven by a motor powered from a battery equipped therewith. The headlamp control apparatus further includes a remaining amount detecting unit that detects a remaining amount of the battery. The color control unit executes a battery remaining amount color switching process in which the color switching request is made to switch the color of the light of the headlamp to a color corresponding to the remaining amount detected by the remaining amount detecting unit.

In this way, it is possible to easily sense shortage of the remaining battery even from outside the vehicle. Therefore, even if the driver overlooks a warning about shortage of the remaining battery, those who are outside the vehicle may notice the shortage of the remaining battery. Warning about shortage of the remaining battery can be given more reliably.

Meanwhile, in a case of driving an automobile at night or the like, quality of visibility ahead changes due to an object to be illuminated by the headlamp, such as scenery ahead, color of road surface of a road the vehicle is traveling, snow on the road, etc.

Japanese Unexamined Patent Application Publication No. 7-137574 describes a headlamp apparatus that, when detecting an obstacle ahead of the automobile equipped with the apparatus, adjusts brightness, irradiation direction, and irradiation range of the headlamp to increase the brightness around the detected obstacle. Use of such headlamp apparatus can improve partial visibility around the obstacle ahead of one's own vehicle, but cannot improve whole visibility ahead of one's own vehicle.

Therefore, the headlamp control apparatus according to a seventeenth aspect of the present invention further includes an object detecting unit that detects an object illuminated by the headlamp. The color control unit executes an object color switching process in which the color switching request is made to switch the color of the light of the headlamp to a color corresponding to the object detected by the object detecting unit.

In this way, it is possible to switch the color of the headlamp, depending on the scenery ahead, color of road surface of the road the vehicle is traveling, presence or absence of snow on the road. Overall visibility ahead of the vehicle can be improved.

Meanwhile, when the driver makes communication with pedestrians, drivers of other vehicles, or others, high-beam flashing may be performed in which the headlamp is instantaneously flashed in a high-beam state. Further, Japanese Unexamined Patent Application Publication No. 2007-045407 describes increasing brightness of the headlamp upon high-beam flashing, thereby allowing those who are ahead of one's own vehicle to recognize high-beam flashing more reliably. However, there has been a problem from the past in which high-beam flashing will dazzle those who are ahead of one's own vehicle. It is necessary to pay sufficient attention to timing of high-beam flashing. If brightness of the headlamp is increased at the same time as high-beam flashing, this problem becomes further troublesome.

Therefore, the headlamp control apparatus according to an eighteenth aspect of the present invention further includes an operation receiving unit that receives an operation by a driver. The color control unit executes a driver operation color switching process in which the color switching request is made in accordance with the operation received through the operation receiving unit.

In this way, the driver, without dazzling those ahead of one's own vehicle, can make communication with those persons.
Meanwhile, in a case of traveling a two way traffic road, a driver may adjust a speed, brake timing and the like, depending on presence of an oncoming vehicle traveling on an opposite lane and a degree of congestion in the opposite lane. However, if visibility is poor or when traveling on a road with poor visibility, the driver may not be able to sufficiently sense a condition of the opposite lane.

Japanese Unexamined Patent Application Publication No. 2009-298299 describes a driving assist apparatus that detects a following vehicle traveling behind an automobile equipped with the apparatus, and notifies the driver. Use of such driving assist apparatus allows the driver to recognize presence of the following vehicle reliably, and also allows safer driving. However, needless to say, even with such driving assist apparatus, sensing the condition of the opposite lane, etc. will never be easy. Also, it is assumed that informing a driver of an oncoming vehicle about presence or absence of a following vehicle detected by the driving assist apparatus can allow the driver of the oncoming vehicle to sense the condition of the opposite lane. However, the above publication does not describe specific information about how to notify the driver of the oncoming vehicle about presence or absence of a following vehicle.

Therefore, the headlamp control apparatus according to a nineteenth aspect of the present invention further includes a vehicle detecting unit that detects a following vehicle that is a vehicle located behind one's own vehicle. The color control unit executes a following vehicle color switching process in which the color switching request is made to switch the color of the light of the headlamp to a color corresponding to a result of detection by the vehicle detecting unit.

According to such configuration, the color of the light of the headlamp can be changed according to presence and absence of and a number of the following vehicle. Therefore, the driver of the oncoming vehicle can easily sense the condition of the opposite lane, and can drive according to the condition of the opposite lane.

As described above, the headlamp apparatus described in Japanese Unexamined Patent Application Publication No. 7-137574 is configured to increase the brightness around the obstacle when an obstacle ahead of the automobile equipped with the apparatus is detected. The headlamp apparatus detects an obstacle ahead of one's own vehicle from an image captured by a video camera. Therefore, it is necessary to perform various image process and image recognition process to the captured image. It is feared that a process load for detecting an obstacle may increase.

Therefore, the headlamp control apparatus according to a twentieth aspect of the present invention further includes a transmitting and receiving unit that transmits electromagnetic wave ahead of one's own vehicle, and receives reflected wave of the transmitted electromagnetic wave. The color control unit executes a reflected wave color switching process in which the color switching request is made to switch the color of the light of the headlamp to a color corresponding to the reflected wave received by the transmitting and receiving unit.

In this way, it is possible to suppress the process load. It is also possible to inform the driver of a distance between one's own vehicle and an obstacle ahead of one's own vehicle, what object the obstacle is like, and so on.
In addition, the headlamp may be provided at least one at each end in a vehicle width direction in front of one's own vehicle. The color switching request may be a request to switch the color of the light of the headlamp provided at one end (twenty-first aspect of the present invention). Even in this case, effect similar to the case of performing the color switching process for the headlamps provided at both ends can be also obtained. Further, since only the color of the light emitted from the headlamp at one end may be configured to be changeable, costs can be reduced.

The headlamp control apparatus according to a twenty-second aspect of the present invention may further include a location detecting unit that detects a location where one's own vehicle is traveling. The color control unit may execute a traveling location color switching process in which the color switching request is made to switch the color of the light of the headlamp to a color corresponding to the location detected by the location detecting unit.

According to such configuration, for example, upon traveling a location where traffic accidents are likely to occur, such as crossing, railroad crossing and downtown, etc., the color of the headlamp may be changed to a warning color. Thereby, without dazzling those who are around one's own vehicle, warning can be given to pedestrians or the like around one's own vehicle to present occurrence of accidents. In addition, soft colors can be used as the color of the headlamp, for example, upon traveling a residential street, etc., whereby it is possible to refrain from applying stimulus to local residents. It is also possible to change the color of the headlamp to vibrant colors, upon traveling in mountains, countryside, etc. Thus, without dazzling drivers of other vehicles and the like, visibility ahead of the vehicle can be improved. It is also possible to apply stimulus to the driver to prevent drowsy driving.

Also, in a twenty-third aspect of the present invention, one's own vehicle travels a predetermined traveling route and performs boarding and alighting of passengers at a predetermined boarding and alighting location provided on the traveling route. The headlamp control apparatus further includes a boarding and alighting determining unit that determines whether or not one's own vehicle performs boarding and alighting of passengers at the boarding and alighting location. The color control unit, if, in a traveling location color switching process, a location one's own vehicle is traveling detected by the location detecting unit is at or near the boarding and alighting location, may switch the color of the light of the headlamp, in accordance with a result of determination on whether or not to perform boarding and alighting of passengers at the boarding and alighting location by the boarding and alighting determining unit.

One's own vehicle in the twenty-third aspect of the present invention refers to, for example, a bus or a passenger train.
In this way, without dazzling those who are around one's own vehicle, it is possible to inform the passengers at train stations and bus stops about whether or not a vehicle one can board will arrive. Convenience can be enhanced.

In addition, in a twenty-fourth aspect of the present invention, one's own vehicle is configured as a railway vehicle provided with a driver's cabin. The boarding and alighting location may be a station.
Further, according to the invention described in Japanese Unexamined Patent Application Publication No. 11-183610 mentioned above, warning is given to the driver of one's own vehicle, depending on an inter-vehicle distance from a preceding vehicle traveling ahead of one's own vehicle. However, it is not possible to notify the driver of the preceding vehicle that one's own vehicle is approaching.

Therefore, the headlamp control apparatus according to a twenty-fifth aspect of the present invention further includes an inter-vehicle distance detecting unit that detects an inter-vehicle distance from a vehicle traveling ahead of one's own vehicle. The color control unit executes an inter-vehicle distance color switching process in which the color switching request is made to switch the color of the light of the headlamp to a color corresponding to the inter-vehicle distance detected by the inter-vehicle distance detecting unit.

In this way, when one's own vehicle is approaching the preceding vehicle, it is possible to give warning to the driver of the preceding vehicle.
In the meantime, when a traffic jam occurs during traveling in an expressway and the vehicle has to be stopped, it is necessary to flash a hazard lamp as a warning to the following vehicle. However, the driver may forget how to operate the switch to flash the hazard lamp or may be unable to instantaneously remember where the switch is.

Japanese Unexamined Patent Application Publication No. 2004-268720 describes that a hazard lamp automatically starts to flash when a shift lever is in a reverse position. However, when stopping a vehicle due to a traffic jam on an expressway, the shift lever is not changed to the reverse position. It is not possible to automatically start flashing the hazard lamp.

Therefore, in the headlamp control apparatus according to a twenty-sixth aspect of the present invention, one's own vehicle is configured as an automobile or motorcycle. The headlamp control apparatus further includes a road type detecting unit that detects a type of road one's own vehicle is traveling, a hazard lamp controlling unit that controls a hazard lamp of one's own vehicle, and a speed reduction detecting unit that detects that a speed of one's own vehicle is less than a predetermined threshold. The color control unit, when an expressway is detected as the type of road by the road type detecting unit and it is detected by the speed reduction detecting unit that the speed of one's own vehicle is less than the threshold, executes a speed reduction color switching process in which the color switching request is made to switch the color of the light of the headlamp. The hazard lamp control unit, when an expressway is detected as the type of road by the road type detecting unit and it is detected by the speed reduction detecting unit that the speed of one's own vehicle is less than the threshold, causes the hazard lamp to start flashing.

In this way, it is possible to automatically start flashing the hazard lamp upon stopping the vehicle on an expressway due to a traffic jam, and change the color of the headlamp. Drivers of vehicles around one's own vehicle can be more reliably warned.

In the meantime, there is a road, for relaxation of congestion, etc., provided with a fellow passenger priority lane where an automobile with a fellow passenger can preferentially travel. However, it is difficult to determine presence or absence of a fellow passenger from outside. It is difficult to exercise strict control over an automobile traveling the fellow passenger priority lane without a fellow passenger.

Japanese Unexamined Patent Application Publication No. 2005-10035 describes a navigation apparatus that detects a number of persons who are boarding on a vehicle, and performs searches for destination or the like depending on the number of persons. According to such navigation apparatus, it is possible to identify automatically the number of passengers in the vehicle. However, it is not possible to notify those outside about the number of passengers in the vehicle.

Therefore, the headlamp control apparatus according to a twenty-seventh aspect of the present invention further includes a number of person detecting unit that detects a number of persons boarding on one's own vehicle. The color control unit executes a number of passenger color switching process in which the color switching request is made to switch the color of the light of the headlamp to a color corresponding to the number of persons detected by the number of person detecting unit.

In this way, the number of persons boarding on the vehicle can be easily sensed from outside. Strict control over a vehicle traveling the above mentioned fellow passenger priority lane without a fellow passenger is facilitated.

In the meantime, Japanese Unexamined Patent Application Publication No. 10-16780 describes a crossing warning display apparatus in which an identification label is provided in a vehicle of a train, the identification label is read by an infrared sensor provided beside a track, and waiting time at a crossing is displayed based on a read result. Use of such crossing warning apparatus allows pedestrians or drivers of vehicles who cross the crossing to be notified of the waiting time at the crossing. The pedestrians and the like can bypass the crossing, etc., depending on the waiting time. However, it is necessary to provide the identification label to the train and an infrared sensor beside the track, as well as to maintain and manage the labels and sensors. This increases costs.

Therefore, in the headlamp control apparatus according to a twenty-eighth aspect of the present invention, one's own vehicle is configured as a railway vehicle provided with a driver's cabin. The headlamp control apparatus further includes a number of vehicles detecting unit that detects a number of a series of railway vehicles that constitutes a train including one's own vehicle. The color control unit executes a number of vehicle color switching process in which the color switching request is made to switch the color of the light of the headlamp to a color corresponding to the number of railway vehicles detected by the number of vehicles detecting unit.

The number of vehicles detecting unit may communicate with a device provided in each vehicle and detect the number of the vehicles based on information acquired from these devices.
According to such configuration, without newly providing equipment in railway vehicles and beside tracks, and at low cost, the waiting time at a crossing can be provided to pedestrians and drivers of vehicles waiting for passing of a train at the crossing based on the color of the headlamp. The pedestrians and the like can bypass the crossing, etc. depending on the waiting time.

In the meantime, Japanese Unexamined Patent Application Publication No. 11-238195 describes a train type display device that emits different light to a side surface of a train parking at a station, depending on whether the train is a deadhead train or a traveling train. Use of such train type display device allows passengers to easily determine whether it is possible to board on the train parking at the station. However, it is necessary to provide the train type display device that emits light to each vehicle constituting the train at each station. Increase in cost is a concern.

Therefore, in the headlamp control apparatus according to a twenty-ninth aspect of the present invention, one's own vehicle is adapted to travel a predetermined traveling route and performs boarding and alighting of passengers at a predetermined boarding and alighting location provided on the traveling route. The headlamp control apparatus further includes a boarding propriety determining unit that determines whether or not boarding to one's own vehicle is permissible. The color control unit executes a boarding propriety color switching process in which the color switching request is made to switch the color of the light of the headlamp to a color corresponding to propriety of boarding to one's own vehicle determined by the boarding propriety determining unit.

Here, one's own vehicle in the twenty-ninth aspect of the present invention may be, for example, a bus or a passenger train.
In this way, without providing new equipment at a boarding and alighting location such as a station, it is possible to let passengers understand whether or not boarding to one's own vehicle is permissible, at low cost.

In the meantime, the above described Japanese Unexamined Patent Application Publication No. 7-137574 describes a headlamp apparatus that, when detecting an obstacle ahead of an automobile equipped with the apparatus, adjusts brightness, irradiation direction, and irradiation range of the headlamp to increase brightness around the detected obstacle. Installing such headlamp apparatus in a railway vehicle with allows warning to be given to pedestrians passing through a crossing and a driver of the railway vehicle when the railway vehicle approaches the crossing. On the other hand, it is feared that a driver ahead of one's own vehicle and other pedestrians may be dazzled by the headlamp.

Therefore, in the headlamp control apparatus according to a thirtieth aspect of the present invention, one's own vehicle is configured as a railway vehicle provided with a driver's cabin. The headlamp control apparatus further includes a pedestrian detecting unit that detects a pedestrian on a track ahead of one's own vehicle. The color control unit executes a pedestrian color switching process in which the color switching request is made to switch the color of the light of the headlamp to a color corresponding to presence or absence of a pedestrian detected by the pedestrian detecting unit.

In this way, in a case where there is a pedestrian or the like who crosses the crossing ahead of the railway vehicle, warning can be given to the pedestrian and the driver of one's own vehicle, without dazzling those who are ahead.

In a thirty-first aspect of the present invention, the headlamp is configured to be able to flash. The color control unit, in the pedestrian color switching process, may further make a flashing state switching request to switch a flashing state of the headlamp, depending on presence or absence of a pedestrian detected by the pedestrian detecting unit.

In this way, when a pedestrian is present ahead of one's own vehicle, warning can be given more effectively.
In the meantime, conventionally, a brake lamp that lights up during operation of a brake is provided at a rear of an automobile and a motorcycle, by which it is possible to notify other vehicles that travel behind one's own vehicle of an operating state of the brake. However, it is not possible to notify other vehicles traveling ahead of the operating state of the brake of one's own vehicle.

Here, Japanese Utility Model Registration No. 3124140 describes a lighting system that lights an indicator lamp of an automobile in accordance with operation of an accelerator. It is conceived that, by lighting the indicator lamp in accordance with operation of a brake pedal in place of the operation of the accelerator, it is possible to notify other vehicles traveling ahead of the operating state of the brake of one's own vehicle.

However, if a new dedicated indicator lamp that lights up in response to the operation of the accelerator is provided upon installment of the above-described lighting system, it is feared that manufacturing cost may increase and appearance may be deteriorated. Further, if lighting devices, such as a headlamp, a directional indicator and the like, which are traditionally equipped with an automobile are lit in response to the operation of the brake pedal, these lighting devices are used in a way different from the original way of use and will not be able to sufficiently play the original roles of the lighting devices.

Therefore, the headlamp control apparatus according to a thirty-second aspect of the present invention further includes an operating state detecting unit that detects an operating state of a brake of one's own vehicle. The color control unit executes a brake operating state color switching process in which the color switching request is made to switch the color of the light of the headlamp to a color corresponding to the operating state of the brake detected by the operating state detecting unit.

In this way, a dedicated indicator lamp is unnecessary to provide. Without inhibiting a native function of the headlamp to illuminate ahead of one's own vehicle, the operating state of the brake of the vehicle can be sensed from ahead of the vehicle.

In the meantime, as described in Japanese Unexamined Patent Application Publication No. 06-159160, a vehicle is known which is equipped with a self-diagnostic apparatus that performs diagnostics of one's own vehicle, and gives warning by means of a lamp, etc. when abnormality is detected. By installing such self-diagnosis apparatus, failure of the vehicle can be detected early. However, there are cases where those who are not familiar with handling of a vehicle overlook the failure of the vehicle.

Therefore, the headlamp control apparatus according to a thirty-third aspect of the present invention further includes a failure detecting unit that detects failure of one's own vehicle. The color control unit executes a failure color switching process in which the color switching request is made to switch the color of the light of the headlamp to a color corresponding to the failure of one's own vehicle detected by the failure detecting unit.

According to such configuration, it is possible to determine presence or absence of failure of the vehicle even from outside the vehicle. Thus, those other than the owner of the vehicle, those who do not use the vehicle, etc. can readily notice occurrence of failure. Therefore, even if the owner or the user of the vehicle overlooks failure, others may notice the failure, and notify the owner or the like about occurrence of failure. It is possible to inhibit failure of the vehicle from being left for a long time.

In recent years, an in-vehicle device has been proposed which allows implementation of various functions in cooperation with a mobile phone and the like possessed by a driver. Specifically, a navigation apparatus described in Japanese Unexamined Patent Application Publication No. 2002-288172 is configured to be able to register, for each user of one's own vehicle, various setting information about a vehicle environment such as seat position, audio volume, setting temperature of an air conditioner or the like. Then, identification information of the user is acquired from the mobile phone or the like that exists in a vicinity of the apparatus by wireless communication to adjust the vehicle environment by the setting information corresponding to the user indicated by the identification information.

According to such navigation apparatus, by pre-registering the setting information, the in-vehicle environment can be automatically adjusted according to the individual user boarding on the vehicle. Usability can be improved. However, since the navigation apparatus only adjusts the in-vehicle environment to suit the user, by who the vehicle is used cannot be determined from outside the vehicle.

Therefore, the headlamp control apparatus according to a thirty-fourth aspect of the present invention further includes a comparing unit that acquires identification information of a user from a mobile device in a vicinity of a driver seat by wireless communication, and compares the identification information with identification information indicating a person who has been pre-registered as a driver of one's own vehicle. The color control unit executes a driver color switching process in which the color switching request is made to switch the color of the light of the headlamp to a color corresponding to a result of comparison by the comparing unit.

According to such configuration, when the vehicle is traveling with the headlamp lit, the driver can be identified from outside the vehicle. For this reason, it is possible to easily sense from outside the vehicle that other person who has not been registered as the driver is driving the vehicle. Early detection of theft of the vehicle becomes possible. Also, for example, when a vehicle that is assumed to be driven by more than one driver, such as a business vehicle for company use, a vehicle shared by a family, is equipped with the headlamp control apparatus, who among the registered drivers is driving the vehicle can be easily identified. Convenience can be enhanced.

In the meantime, it is assumed that risk of accidents will increase when a driver makes calls, sends or receives e-mails, and so on by a mobile phone while driving. By notifying outside the vehicle of a use state of a mobile phone by a driver, it is assume possible to warn other vehicles and pedestrians of risk of accidents.

Here, a navigation apparatus described in Japanese Unexamined Patent Application Publication No. 2002-288172 is configured to acquire identification information of a user of a vehicle by wireless communication from a mobile phone so as to adjust an in-vehicle environment. However, this navigation apparatus cannot obtain a use state of the mobile phone and cannot warn other vehicles or the like of risk of accidents.

Therefore, the headlamp control apparatus according to a thirty-fifth aspect of the present invention further includes a use state determining unit that determines a use state of a mobile phone by a driver. The color control unit executes a use state color switching process in which the color switching request is made to switch the color of the light of the headlamp to a color according to a result of determination by the use state determining unit.

According to such configuration, when the vehicle is traveling with the headlamp lit, it is possible to sense that calls, e-mails or the like via the mobile phone are being made by the driver, even from outside the vehicle. Other vehicles and pedestrians can be warned.

As already mentioned, in a case where an automobile is driven at night or the like, visibility ahead changes depending on an object to be illuminated by the headlamp, such as scenery ahead, color of road surface of a road the vehicle is traveling, snow on the road, etc.

According to the headlamp described in Japanese Unexamined Patent Application Publication No. 7-137574, when an obstacle ahead of one's own vehicle is detected, brightness, irradiation direction, and irradiation range of the headlamp are adjusted so as to increase brightness around the obstacle. Thereby, it is possible to partially improve visibility around the obstacle ahead of one's own vehicle. However, it is not possible to improve entire visibility ahead of one's own vehicle.

Therefore, in the headlamp control apparatus according to a thirty-sixth aspect of the present invention, a plurality of setting colors are predetermined as the color of the light of the headlamp. The color control unit executes a setting color switching process in which one of the setting colors is selected in sequence each time a predetermined timing arrives, and the color switching request is made to switch the color of the light of the headlamp to the selected setting color.

When light of the headlamp is irradiated to the object, visibility of the object is different due to a combination of color, material and the like of the object and the color of the light. According to such configuration, the color of the light of the headlamp is switched to each setting color in sequence. Therefore, it is possible to generate periodic timing to enhance visibility of the object by appropriately selecting the setting color, regardless of the color or the like of the object.

Therefore, by setting, for example, about a few seconds as one cycle at the longest and switching the color of the headlamp so that all the setting colors are selected in each cycle, it is possible to make the timing at which visibility of the object is improved arrive in a short period. Therefore, even if there are a plurality of objects with different colors, etc. ahead of one's own vehicle, visibility of these objects will be substantially improved simultaneously. The whole visibility ahead of one's own vehicle can be improved.

### BRIEF DESCRIPTION OF THE DRAWINGS

FIG. 1A is a block diagram of a headlamp system according to a first embodiment, and FIG. 1B is a block diagram of a headlamp control apparatus.
FIG. 2A is a block diagram of a lighting device, and FIG. 2B is a flowchart of a drowsiness suppression process.
FIG. 3 is a flowchart of a weather determination process.
FIG. 4 is a flowchart of a time zone determination process.
FIG. 5A is a flowchart of an oncoming vehicle handling process, and FIG. 5B is a flowchart of a horn interlocking process.
FIG. 6A is a flowchart of an accelerator interlocking process, and FIG. 6B is a flowchart of a remaining battery notification process.
FIG. 7A is a flowchart of an object handling process, and FIG. 7B is a flowchart of a passing process.
FIG. 8A is a flowchart of a following vehicle detection process, and FIG. 8B is a flowchart of an obstacle detection process.
FIG. 9A is a flowchart of a traveling location detection process, and FIG. 9B is a flowchart of an inter-vehicle distance detection process.
FIG. 10A is a flowchart of a number of passenger detection process, and FIG. 10B is a flowchart of a vehicle speed detection process.
FIG. 11A is a block diagram of a headlamp system according to a second embodiment, and FIG. 11B is a block diagram of a headlamp control apparatus according to the second embodiment.
FIG. 12A is a flowchart of a station passing process, and FIG. 12B is a flowchart of a number of vehicle detection process.
FIG. 13A is a flowchart of a boarding propriety determination process, and FIG. 13B is a flowchart of a pedestrian detection process.
FIG. 14A is a block diagram of a headlamp system according to a third embodiment, and FIG. 14B is a block diagram of a headlamp control apparatus according to the third embodiment.
FIG. 15A is a flowchart of a brake interlocking process, and FIG. 15B is a flowchart of a failure interlocking process.
FIG. 16A is a flowchart of a driver identification process, and FIG. 16B is a flowchart of a use state determination process.
FIG. 17 is a flowchart of a visibility enhancement process.

### EXPLANATION OF REFERENCE NUMERALS

1 ...headlamp system, 2 ...headlamp system, 3 ... headlamp system, 10 ...headlamp control apparatus, 11 ...control unit, 12 ...meteorological sensor group, 13 ... camera, 14 ... radar, 15 ... in-vehicle LAN communication unit, 16 ... communication unit, 17 ... operating unit, 18 ... storage unit, 20 ...lighting device, 21 ...light emission control unit, 22 ...right headlamp, 22a ...red LED element, 22b ...green LED element, 22c ...blue LED element, 23 ... left headlamp, 30 ... in-vehicle LAN, 40 ... hazard lamp, 50 ...headlamp control apparatus, 51 ...control unit, 52 ... radar, 53 ... in-vehicle LAN communication unit, 54 ... communication unit, 55 ... operating unit, 56 ...storage unit, 60 ... in-vehicle LAN 70 ... headlamp control apparatus, 71 ...control unit, 72 ...wireless communication unit, 73 ...in-vehicle LAN communication unit, 74 ...communication unit, 75 ... operating unit, 76 ...storage unit, 80 ...mobile device.

### MODE FOR CARRYING OUT THE INVENTION

Hereinafter, embodiments of the present invention will be described with reference to the drawings. Embodiments of the present invention are not to be limited to the embodiments described below, and can take various forms within the technical scope of the present invention.

### [First Embodiment]

### [Description of Configuration]

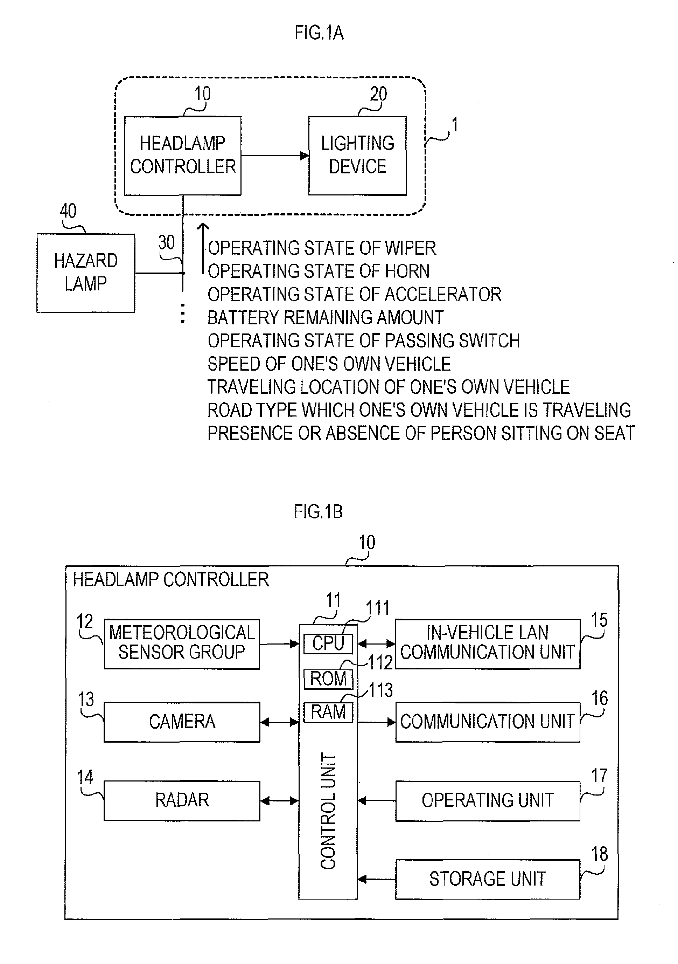

First, a headlamp system 1 mounted in an automobile according to a first embodiment will be described with reference to a block diagram described in FIG. 1A. The headlamp system 1 is provided with a lighting device 20 and a headlamp control apparatus 10. The lighting device 20 irradiates light ahead of one's own vehicle from each end in a width direction in front of one's own vehicle, and can change a color of the light to irradiate. The headlamp control apparatus 10 controls on, off, and flashing of the lighting device 20, and the color and intensity of light to be irradiated.

In addition, the headlamp control apparatus 10 is configured to be able to acquire various information, such as an operating state of a wiper of one's own vehicle, an operating state of a horn, an operating state of an accelerator, an operating state of a passing switch (switch to detect an operation of pulling an operating lever of a directional indicator), a speed of one's own vehicle, etc. through an in-vehicle LAN 30, and control the lighting device 20 in accordance with the information. In a case where one's own vehicle is configured as an electric vehicle, the headlamp control apparatus 10 further obtain a remaining amount of a battery that supplies power to a motor for driving one's own vehicle through the in-vehicle LAN 30 to control the lighting device 20 in accordance with the remaining amount of the battery. Further, the headlamp control apparatus 10 is connected to a not shown navigation device and an occupant sensing device that is provided in each seat and senses presence or absence of a person seated on the seat by a weight sensor, through the in-vehicle LAN 30. The headlamp control apparatus 10 is configured to acquire a road type and a traveling location one's own vehicle is traveling from the navigation device and receive a notification on presence or absence of a person seated on the seat from each of the occupant sensing devices.

Further, as described in FIG. 1B, the headlamp control apparatus 10 includes a control unit 11, a meteorological sensor group 12, a camera 13, a radar 14, an in-vehicle LAN communication unit 15, and a communication unit 16, an operating unit 17, and a storage unit 18. The control unit 11 is configured from a microcomputer (not shown) including a CPU 111, a ROM 112, a RAM 113, an I/O (not shown), a bus line (not shown) that connects the foregoing components, etc. The control unit 11 is intended for integrated control of the headlamp control apparatus 10 in accordance with a program stored in the ROM. The meteorological sensor group 12 includes a raindrop sensor that detects raindrops adhered to a windshield of one's own vehicle, a light sensor that detects brightness outside the vehicle, a temperature sensor that detects temperature outside the vehicle, a humidity sensor that detects humidity outside the vehicle, etc. The camera 13 is intended to take photos in a vicinity of one's own vehicle. The radar 14 is for detecting an obstacle present ahead of one's own vehicle. The in-vehicle LAN communication unit 15 is for communication with various devices mounted on one's own vehicle via the in-vehicle LAN 30. The communication unit 16 is intended for communication with the lighting device 20. The operating unit 17 is intended for receiving various operations from a user. The storage unit 18 is configured from a device that does not require a memory holding operation such as a HDD, a flash memory and the like, and stores various information.

The radar 14 is configured from an antenna that has directivity, and performs transmission of radio wave forward of one's own vehicle and receipt of reflected wave of the radio wave, a transmitting unit that modulates signals to be transmitted from the antenna, a receiving unit that demodulates the reflected wave received by the antenna, a signal process unit that detects a distance and positional relationship between one's own vehicle and an obstacle ahead of one's own vehicle, a shape of the obstacle, etc. from demodulated signals by the receiving unit, and so on.

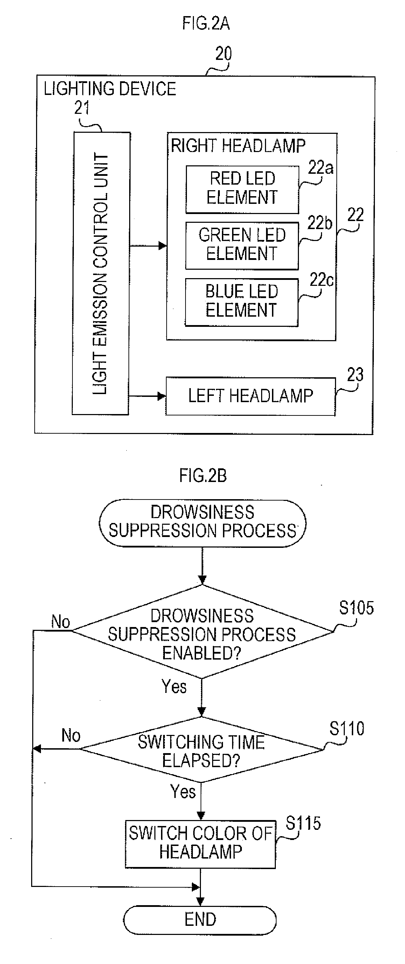

Further, as described in FIG. 2A, the lighting device 20 has a right headlamp 22 and a left headlamp 23 provided at ends in a right and left direction in front of one's own vehicle, and a light emission control unit 21 that controls on, off, or flashing, and color and intensity of irradiated light of these headlamps, in response to signals from the headlamp control apparatus 10.

The right headlamp 22 includes a red LED element 22a, a green LED element 22b, and a blue LED element 22c. The light emission control unit 21 adjusts lighting intensity of each LED element, thereby adjusting on and off of the right headlamp 22 and color and intensity of light to be irradiated.

The left headlamp 23 is also configured in the same manner as the right headlamp 22.

### [Description of Operation]

Next, description on operation of the headlamp control apparatus 10 will be given.

In the headlamp control apparatus 10 of the first embodiment, the control unit 11 is configured to communicate with the light emission control unit 21 of the lighting device 20 via the communication unit 16, and make a color switching request to switch the color of the right headlamp 22 and the left headlamp 23. Further, the headlamp control apparatus 10 is configured to be able to perform processes to switch to color of the headlamps, e.g., a drowsiness suppression process in which the color switching request is periodically made to change the color of the headlamps to awaken a driver, a weather determination process in which the color switching request is made to switch the color of the headlamps to a color in accordance with current weather, etc., depending on a state of one's own vehicle, conditions in the surrounding, and so on. A user can select whether or not to enable each process. Contents of these processes will be described below in detail.

### (1) Drowsiness suppression process

First, the drowsiness suppression process will be described with reference to a flowchart of FIG. 2B. In the process, the driver is awakened by periodic change of the color of the headlamps. This process is a process periodically executed while one's own vehicle is driven with the headlamps lit.

In S105, the control unit 11 of the headlamp control apparatus 10 determines whether or not the drowsiness suppression process is enabled. If an affirmative determination is obtained (S105: Yes), the process is moved to S110. If a negative determination is obtained (S105: No), the process is terminated.

In S110, the control unit 11 determines whether or not predetermined switching time has elapsed since previous switching of the color of the headlamps. When an affirmative determination is obtained (S110: Yes), the process is moved to S115. When a negative determination is obtained (S110: No), the process is terminated. It is preferable that the switching time is equal to or more than five minutes. Further, the control unit 11 may set the switching time in accordance with operation received from a user via the operating unit 17.

In S115, the control unit 11 makes a color switching request to switch the color of the left and right headlamps. Particularly, a switching order of switching the color, for example, from red to blue, to yellow, to green, and then to white, may be determined in advance, and the color of the headlamps may be switched cyclically according to the order. Also, for example, a plurality of colors may be determined in advance as the colors of the headlamps, and one of these colors may be randomly selected.

Further, the color of each headlamp may be switched in a state in which the colors of the left and right headlamps are different. In such case, the switching order of each of the left and right headlamps may be determined individually to be different so as not to illuminate the same color at the same time (for example, from red to blue, to yellow, to green, and then to white, for the right headlamp 22, and from blue to yellow, to green, to white, and then to red, for the left headlamp 23), and the color of each headlamp may be switched in accordance with the individually determined switching order.

Further, the switching order and switching time for each of the left and right headlamps may be set individually, and the switching time of the left and right headlamps may be set different. For each headlamp, the color may be switched in the individual switching order at individual timing.

In addition, the color of the light may be switched for one of the left and right headlamps.
When switching of the color of the light of the headlamps is completed, the control unit 11 terminates the process.

### (2) Weather determination process

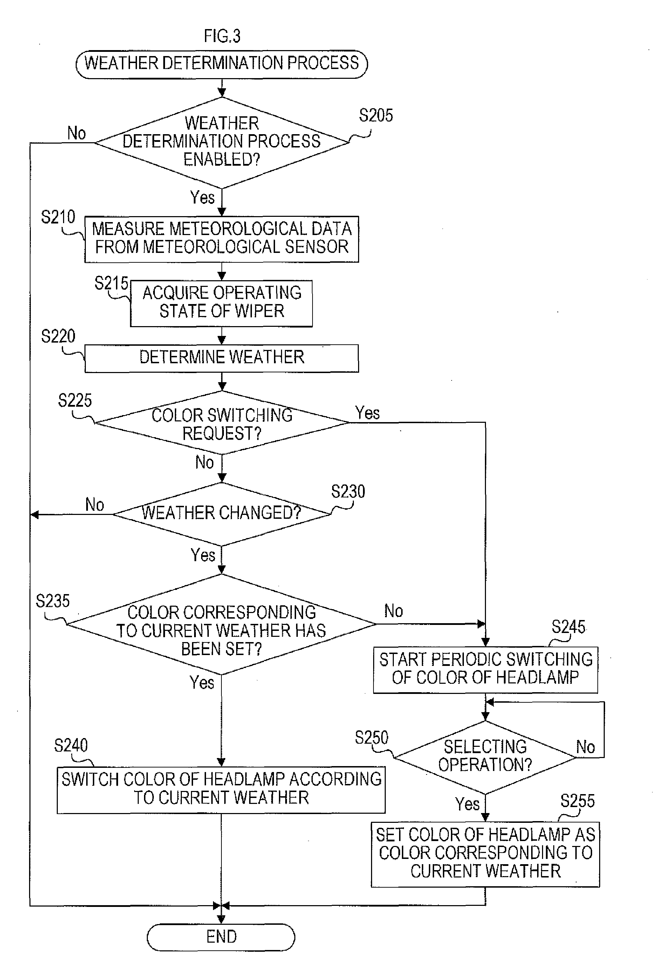

Next, the weather determination process will be described with reference to a flowchart of FIG. 3. In the process, the colors of the headlamps are switched in accordance with current weather. In the headlamp control apparatus 10 of the first embodiment, a corresponding color for each type of weather, such as sunny, cloudy, rain and so on, can be set. In the present process, the current weather is determined and the colors of the light of the headlamps are switched to the corresponding color set to the determined weather. The present process is a process periodically executed while one's own vehicle is driven with the headlamps lit.

In S205, the control unit 11 of the headlamp control apparatus 10 determines whether or not the weather determination process is enabled. If an affirmative determination is obtained (S205: Yes), the process is moved to S210. If a negative determination is obtained (S205: No), the process is terminated.

In S210, the control unit 11 measures weather information such as the state of raindrops on the windshield, illuminance, temperature, humidity and the like outside the vehicle, by signals from the meteorological sensor group 12, and moves the process to S215.

In S215, the control unit 11 acquires the operating state of the wiper of one's own vehicle via the in-vehicle LAN 30, and moves the process to S220.
In S220, the control unit 11 determines the current weather based on the measured weather information and the operating state of the wiper. The process is moved to S225.

In S225, the control unit 11 determines whether or not a change request has been received to change the current color of the headlamps from the user via the operating unit 17. If an affirmative determination is obtained (S225: Yes), the process is moved to S245. If a negative determination is obtained (S225: No), the process is moved to S230.

In S230, the control unit 11 determines whether or not the weather has changed. If a positive determination is obtained (S230: Yes), the process is moved to S235. If a negative determination is obtained (S230: No), the present process is terminated.

In S235, the control unit 11 determines whether or not the corresponding color to the current weather is set. When an affirmative determination is obtained (S235: Yes), the process is moved to S240. If a negative determination is obtained (S235: No), the process is moved to S245.

In S240, the control unit 11 makes the color switching request to switch the color of the light of the headlamps to the corresponding color to the current weather, and then terminates the present process. In addition, different colors may be set individually to the left and right headlamps as the corresponding color of each type of weather, and switching of the color depending on the weather may be performed in a state in which the colors of the left and right headlamps are different.

In S245, the control unit 11 starts a color setting process in which the lighting device 20 switches the color of the headlamps cyclically in a predetermined period (about 10s, for example) in accordance with the predetermined changing order (e.g., from red to blue, to yellow, to green, and then to white). The process is moved to S250.

In S250, the control unit 11 determines whether or not a selecting operation to select the current color of the headlamps switched by the color setting process to a corresponding color to the current weather has been accepted through the operating unit 17. Then, if an affirmative determination is obtained (S250: Yes), the process is moved to S255. If a negative determination is obtained (S250: No), the process is moved to S250 again.

In S255, the control unit 11 fixes the color of the light of the headlamps to the color of the light of the headlamps upon receipt of the selecting operation, sets the color as a corresponding color to the current weather, stores setting information in the storage unit 18, and terminates the present process.

In a case where the corresponding colors are individually set for the left and right headlamps, the color setting process and receipt of the selecting operation (S245 to S255) may be performed first for the right headlamp 22, and thereafter for the left headlamp 23, for example.

Further, when the selecting operation is not performed even after the predetermined time has elapsed, the control unit 11 may set a predetermined color corresponding to the current weather as the corresponding color.

### (3) Time zone determination process

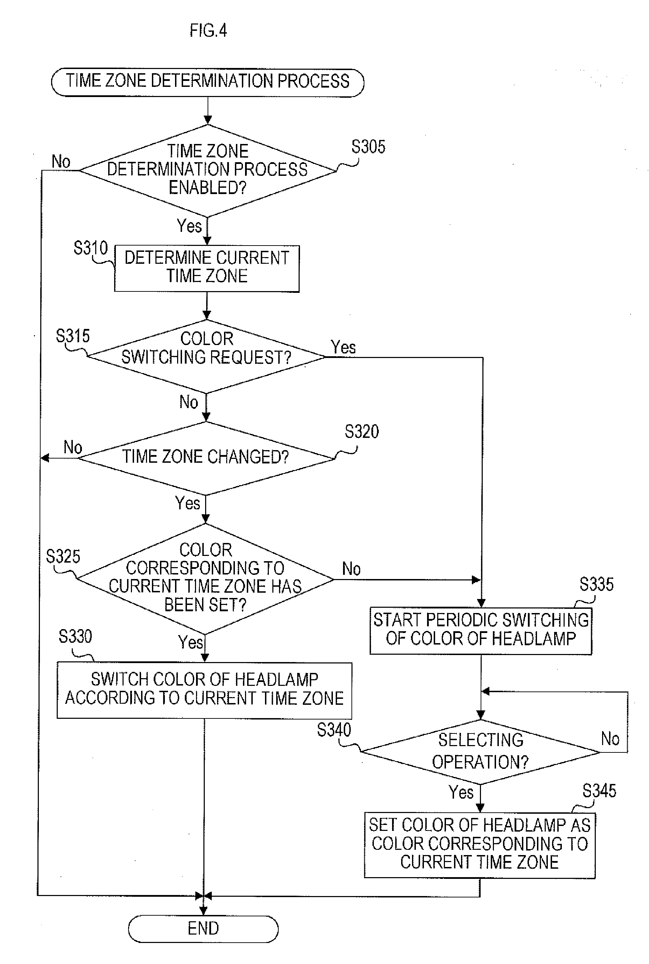

Next, the time zone determination process will be described with reference to a flowchart of FIG. 4. In the process, the color of the headlamps is switched according to the current time zone. In the headlamp control apparatus 10 of the first embodiment, a corresponding color can be set to each time zone, such as morning, evening, immediately after sunset, night and so on. In the present process, the current time zone is determined and the color of the light of the headlamps is switched to the corresponding color set to the determined time zone. The present process is a process periodically executed while one's own vehicle is driven with the headlamps lit.

In S305, the control unit 11 of the headlamp control apparatus 10 determines whether or not the time zone determination process is enabled. If an affirmative determination is obtained (S305: Yes), the process is moved to S310. If a negative determination is obtained (S305: No), the process is terminated.

In S310, the control unit 11 specifies the current date and time by a clock function built into the control unit 11, and determines the current time zone based on the date and time. In addition, the control unit 11 may detect brightness outside the vehicle based on signals from illuminance sensors of the meteorological sensor group 12, and determine the current time zone based on the brightness. Then, the process is moved to S315.

In S315, the control unit 11 determines whether or not the change request to change the current color of the headlamps has been received via the operating unit 17 from a user. If an affirmative determination is obtained (S315: Yes), the process is moved to S335. If a negative determination is obtained (S315: No), the process is moved to S320.

In S320, the control unit 11 determines whether or not the time zone has changed. If an affirmative determination is obtained (S320: Yes), the process is moved to S325. If a negative determination is obtained (S320: No), the present process is terminated.

In S325, the control unit 11 determines whether or not the corresponding color to the current time zone is set. If an affirmative determination is obtained (S325: Yes), the process is moved to S330. If a negative determination is obtained (S325: No), the process is moved to S335.

In S330, the control unit 11 makes a color switching request to switch the color of the light of the headlamps to the corresponding color to the current time zone, and then terminates the present process. In addition, a different color may be individually set as the corresponding color to each time zone for the left and right headlamps. The switching of the color corresponding to the time zone may be performed in a state in which the colors of the left and right headlamps are different.

In S335, the control unit 11 starts a color setting process in which the lighting device 20 switches the color of the headlamps cyclically in a predetermined cycle (about 10s, for example) in accordance with a predetermined changing order (e.g., from red to blue, to yellow, to green, and then to white), and moves the process to S340.

In S340, the control unit 11 determines whether or not a selecting operation to select the current color of the headlamps switched by the color setting process as a corresponding color to the current weather has been received through the operating unit 17. Then, if an affirmative determination is obtained (S340: Yes), the process is moved to S345. If a negative determination is obtained (S340: No), the process is moved to S340 again.

In S345, the control unit 11 fixes the color of the light of the headlamps to the color of the light of the headlamps upon receipt of the selecting operation, sets the color as the corresponding color to the current time zone, stores setting information in the storage unit 18, and ends the present process.

In a case where a corresponding color is separately set for the left and right headlamps, the color setting process and receipt of the selecting operation (S335 to S345) may be performed first for the right headlamp 22, and thereafter for the left headlamp 23, for example.

Further, when the selecting operation is not performed even after a predetermined time has elapsed, the control unit 11 may set a predetermined color corresponding to the current weather as the corresponding color.

### (4) Oncoming vehicle handling process

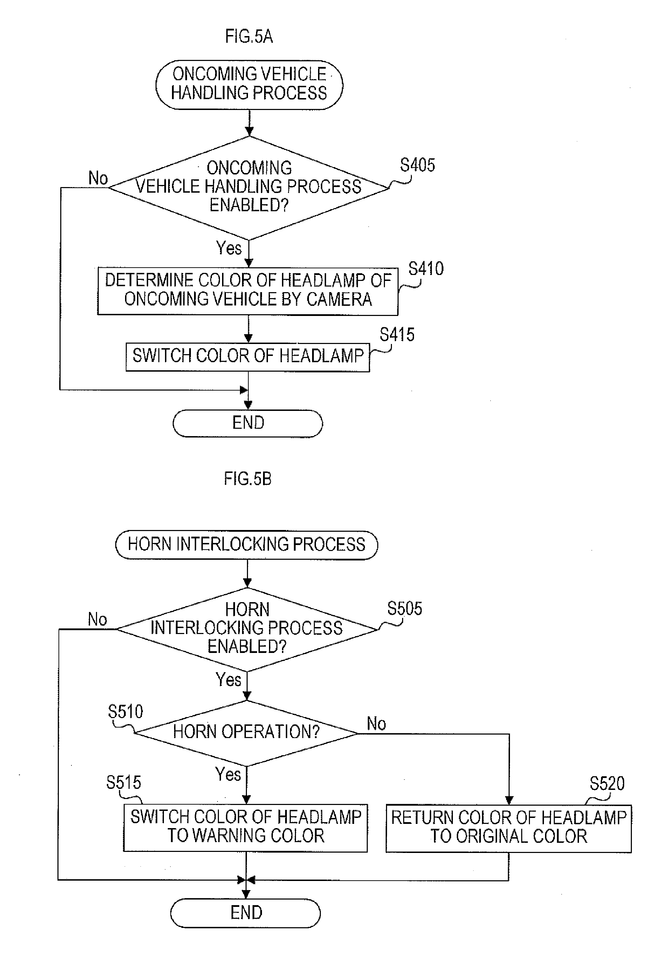

Next, an oncoming vehicle handling process will be described with reference to a flowchart of FIG. 5A. In the process, the color of the headlamps of the vehicle is switched according to a color of headlamps of an oncoming vehicle. The present process is a process periodically executed while one's own vehicle is driven with the headlamps lit.

In S405, the control unit 11 of the headlamp control apparatus 10 determines whether or not the oncoming vehicle handling process is enabled. If an affirmative determination is obtained (S405: Yes), the process is moved to S410. If a negative determination is obtained (S405: No), the process is terminated.

In S410, the control unit 11 determines the color of the headlamps of the oncoming vehicle based on a right front image of one's own vehicle taken by the camera 13, and moves the process to S415.
In S415, the control unit 11, when the color of the headlamps of the oncoming vehicle and the color of the headlamps of the vehicle coincide, makes a color switching request to switch the color of the headlamps to a color different from the color of the headlamps of the oncoming vehicle. At this time, the color of the right headlamp 22 and the color of the left headlamp 23 may be different. After the color of the headlamps is switched, the control unit 11 terminates the present process.

### (5) Horn interlocking process

Next, a horn interlocking process will be described with reference to a flowchart of FIG. 5B. In the process, the color of the headlamps of one's own vehicle is switched according to an operating state of a horn of one's own vehicle. The present process is a process periodically executed while one's own vehicle is driven with the headlamps lit.

In S505, the control unit 11 of the headlamp control apparatus 10 determines whether or not the horn interlocking process is enabled. When an affirmative determination is obtained (S505: Yes), the process is moved to S510. If a negative determination is obtained (S505: No), the process is terminated.

In S510, the control unit 11 acquires the operating state of the horn through the in-vehicle LAN 30, and determines whether or not the horn is beeped accordingly. If an affirmative determination is obtained (S510: Yes), the process is moved to S515. If a negative determination is obtained (S510: No), the process is moved to S520.

In S515, the control unit 11 makes a color switching request to switch the color of the headlamps to a warning color (yellow, for example). At this time, only the color of one headlamp may be switched. Then, the control unit 11 terminates the present process.

On the other hand, in S520, the control unit 11 makes a color switching request to return the color of the headlamps to the original color (white, for example) from the warning color, and then terminates the process.
In addition, the same process may be performed with the headlamps turned off. In such case, the control unit 11, when the operation of the horn is made, may make the lighting device 20 turn on the headlamps in a state in which the color of the emitted light is set to the warning color, and, when the operation of the horn is no longer made, may turn off the headlamps. It should be noted that this process may be performed only for one headlamp.

### (6) Accelerator interlocking process

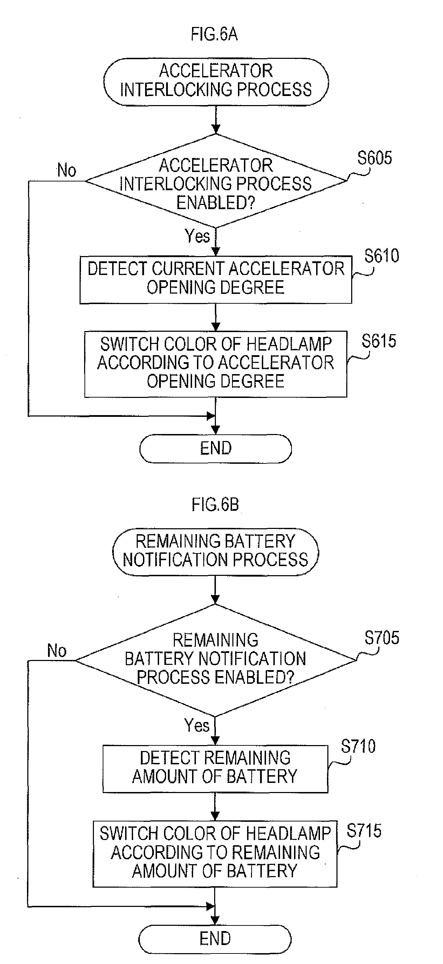

Next, an accelerator interlocking process will be described with reference to a flowchart of FIG. 6A. In the process, the color of the headlamps of one's own vehicle is switched in accordance with an operating state of an accelerator of one's own vehicle. The present process is a process periodically executed while one's own vehicle is driven with the headlamps lit.

In S605, the control unit 11 of the headlamp control apparatus 10 determines whether or not the accelerator interlocking process is enabled. If an affirmative determination is obtained (S605: Yes), the process is moved to S610. If a negative determination is obtained (S605: No), the process is terminated.

In S610, the control unit 11 acquires the operating state of the accelerator through the in-vehicle LAN 30, detects a current accelerator opening degree based on the operating state, and moves the process to S615.
In S615, the control unit 11 makes a color switching request to switch the color of the headlamps to a color according to the current accelerator opening.

In particular, for example, assuming that an accelerator opening degree varies in a range of 0-100%, a color corresponding to each range of the accelerator opening degree of 0-10%, 10-20%, and 20-30% may be determined. The color of the headlamps may be switched to the color corresponding to the range to which the detected accelerator opening degree belongs.

Also, for example, when the accelerator opening degree is 0%, the color of the headlamps may be set to white. Depending on increase or decrease of the accelerator opening by 1%, lighting intensity of a red LED element of the headlamps may be increased or decreased by 1%. As such, the color of the headlamps may be continuously switched in response to changes in the accelerator opening degree.

In addition, the color of only one of the headlamps may be switched.
When switching of the color of the headlamps is complete, the control unit 11 terminates the process.

### (7) Remaining battery notification process

Next, a remaining battery notification process will be described with reference to a flowchart of FIG. 6B. In the process, the color of the headlamps is switched according to a remaining amount of a battery of a motor that is a power source of one's own vehicle, in a case where one's own vehicle is configured as an electric vehicle. The present process is a process periodically executed while one's own vehicle is driven with the headlamps lit.

In S705, the control unit 11 of the headlamp control apparatus 10 determines whether or not the remaining battery notification process is enabled. If an affirmative determination is obtained (S705: Yes), the process is moved to S710. If a negative determination is obtained (S705: No), the process is terminated.

In S710, the control unit 11 acquires the current remaining amount of the battery through the in-vehicle LAN 30, and moves the process to S715.
In S715, the control unit 11 makes a color switching request to switch the color of the headlamps to a color corresponding to the current remaining amount of the battery.

In particular, for example, each time the remaining amount of the battery is reduced by 10%, the color of the headlamps may be switched in a phased manner, like from white to yellow, to green, to ....
Also, for example, the color of the headlamps when the remaining amount of the battery is 100% may be set to white. Depending on decrease of the remaining amount of the battery by 1%, lighting intensity of a red LED element of the headlamps may be decreased by 1%. As such, the color of the headlamps may be continuously switched in accordance with changes in the remaining amount of the battery.

In addition, the color of only one of the headlamps may be switched.
When switching of the color of the headlamps is complete, the control unit 11 terminates the process.
In addition, the present process may be performed over a predetermined period of time at the beginning and at the end of driving of one's own vehicle.

Also, the same process may be performed with the headlamps turned off. In such case, the control unit 11, for example, may make the lighting device 20 turn on the headlamps in a state in which light of a color corresponding to the remaining amount of the battery is irradiated at the start of operation, at the end of operation of one's own vehicle or the like, for a certain period. In addition, it should be noted that this process may be performed only for one headlamp.

### (8) Object handling process

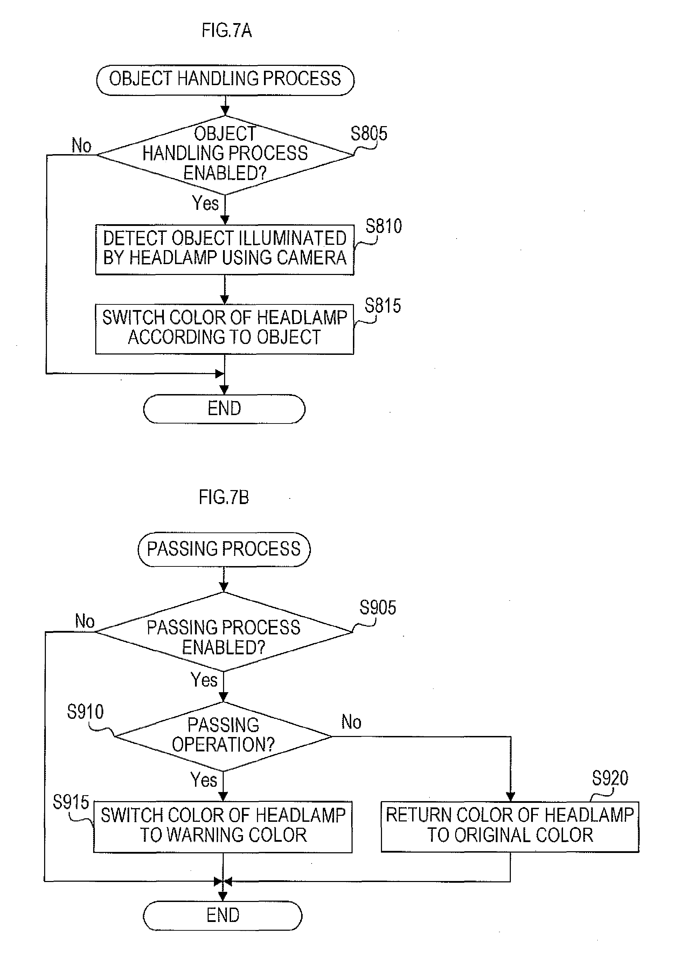

Next, an object handling process will be described with reference to a flowchart of FIG. 7A. In the process, the color of the headlamps is switched in accordance with an object illuminated by the headlamps of one's own vehicle (in other words, an object that is present ahead of one's own vehicle). The present process is a process periodically executed while one's own vehicle is driven with the headlamps lit.

In S805, the control unit 11 of the headlamp control apparatus 10 determines whether or not the object handling process is enabled. If an affirmative determination is obtained (S805: Yes), the process is moved to S810. If a negative determination is obtained (S805: No), the process is terminated.

In S810, the control unit 11 detects an object ahead of the vehicle illuminated by the headlamps based on an image taken by the camera 13. In particular, for example, those which are present in the surrounding of a traveling road while driving may be detected as the object such as wooden houses, trees, and high-rise buildings, etc. Or, the traveling road such as a gravel road, asphalt paved road, concrete paved road, etc. may be detected as the object. Or, snow or a puddle on the road, etc., may be detected as the object. Then, the control unit 11 moves the process to S815.

In S815, the control unit 11 makes a color switching request to switch the color of the headlamps to a color according to the detected object. More specifically, when one object is detected, the color of the headlamps is switched in accordance with the object. When a plurality of objects are detected, the color of the headlamps is switched in accordance with the object, among these objects, that gives a greatest impact to visibility ahead of one's own vehicle.

For example, if snow on the road, an asphalt paved road, and trees are detected as the object, snow on the road may be considered as the object that has a greatest impact on visibility. The color of the headlamps may be switched to yellow accordingly. In addition, for example, if a wooden house and a concrete paved road are detected as the object, the wooden house may be considered as the object that gives a greatest impact on visibility. The color of the headlamps may be switched to white accordingly.

At this time, the color of only one of the headlamps may be switched.
When switching of the color of the headlamps is complete, the control unit 11 terminates the process.

### (9) Passing process

Next, a passing process will be described with reference to a flowchart of FIG. 7B. In the process, the color of the headlamps of one's own vehicle is switched in accordance with an operating state of a passing switch (whether or not an operation of pulling an operating lever of a directional indicator is made). The present process is a process periodically executed while one's own vehicle is driven with the headlamps lit.

In S905, the control unit 11 of the headlamp control apparatus 10 determines whether or not the passing process is enabled. When an affirmative determination is obtained (S905: Yes), the process is moved to S910. If a negative determination is obtained (S905: No), the present process is terminated.

In S910, the control unit 11 determines whether or not a passing operation has been made based on the operating state of the passing switch obtained through the in-vehicle LAN communication unit 15. Then, if an affirmative determination is obtained (S910: Yes), the process is moved to S915. If a negative determination is obtained (S910: No), the process is moved to S920.

In S915, the control unit 11 makes a switching request to switch the color of the headlamps to a warning color (yellow, for example). At this time, the color of only one of the headlamps may be switched. Then, the control unit 11 terminates the present process.

On the other hand, in S920, the control unit 11 makes a color switching request to return the color of the headlamps to the original color from the warning color, and then terminates the present process.
In addition, the same process may be performed with the headlamps turned off. In such case, the control unit 11, when the passing operation is made, may make the lighting device 20 turn on the headlamps in a state in which the color of the light to be irradiated is set to the warning color, and, when the passing operation is no longer made, may make the lighting device 20 turn off the headlamps. It should be noted that this process may be performed only for one headlamp.

### (10) Following vehicle detection process

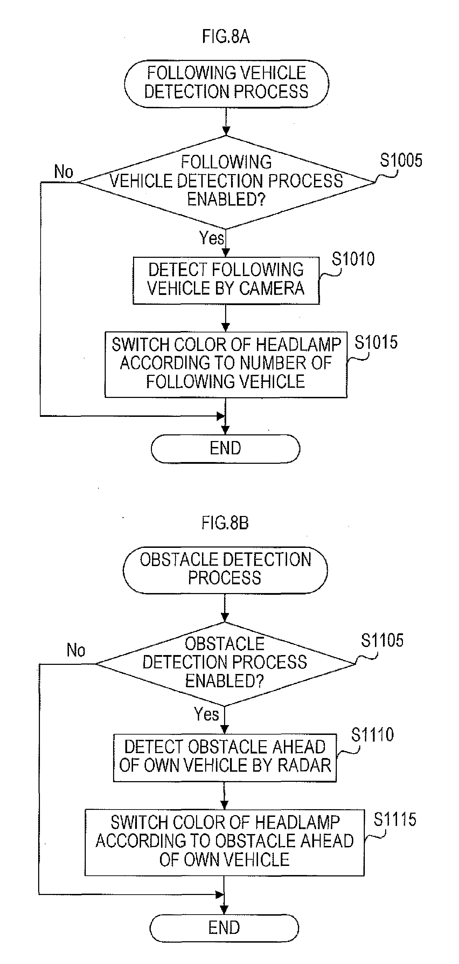

Next, a following vehicle detection process will be described with reference to a flowchart of FIG. 8A. In the process, the color of the headlamps is switched according to a number of following vehicles that are vehicles that travel following one's own vehicle on a road one's own vehicle is traveling. The present process is a process periodically executed while one's own vehicle is driven with the headlamps lit.

In S1005, the control unit 11 of the headlamp control apparatus 10 determines whether or not the following vehicle detection process is enabled. When an affirmative determination is obtained (S1005: Yes), the process is moved to S1010. When a negative determination is obtained (S1005: No), the process is terminated.

In S1010, based on an image of rearward of one's own vehicle captured by the camera 13, the control unit 11 detects the number of the following vehicles that are traveling within a constant distance (e.g., less than 50m) from one's own vehicle, and moves the process to S1015.

In S1015, the control unit 11 makes a color switching request to switch the color of the headlamps to a color according to the detected number of the following vehicles.
Specifically, for example, a corresponding color per each range of the number of the following vehicles, such as 0-2, 3-5, 6-8, etc., may be determined. The color of the headlamps may be switched to the color corresponding to the range to which the detected number of the following vehicles belongs.

In addition, for example, the color of the headlamps when the number of following vehicles is zero (0) may be set to white. Depending on increase or decrease in the number of the following vehicles by one, lighting intensity of a red LED element of the headlamps may be increased or decreased by 5%. As such, the color of the headlamps may be continuously switched, depending on the number of the following vehicles.

Further, the control unit 11 may make a color switching request to switch the color of the headlamps simply depending on presence or absence of a following vehicle.
In addition, the color of only one of the headlamps may be switched.

When switching of the color of the headlamps is complete, the control unit 11 terminates the process.

### (11) Obstacle detection process

Next, an obstacle detection process will be described with reference to a flowchart of FIG. 8B. In the process, the color of the headlamps is switched according to an obstacle present ahead of one's own vehicle. The present process is a process periodically executed while one's own vehicle is driven with the headlamps lit.

In S1105, the control unit 11 of the headlamp control apparatus 10 determines whether or not the obstacle detection process is enabled. If an affirmative determination is obtained (S1105: Yes), the process is moved to S1110. If a negative determination is obtained (S1105: No), the process is terminated.

In S1110, the control unit 11 detects an obstacle ahead of one's own vehicle by the radar 14 to sense a distance between one's own vehicle and the obstacle, a positional relationship, and a shape of the obstacle, and then moves the process to S1115.

In S1115, the control unit 11 makes a color switching request to switch the color of the headlamps to a color in accordance with presence or absence of an obstacle detected ahead of one's own vehicle, and the distance between one's own vehicle and the obstacle.
Specifically, for example, when an obstacle is detected ahead of one's own vehicle, the color of the headlamps may be set to a warning color (yellow, for example). In addition, a plurality of different warning colors may be set in accordance with the distance between the obstacle and one's own vehicle in advance. The color of the headlamps may be switched to the warning color depending on the distance between one's own vehicle and the detected obstacle.

In addition, what the obstacle is may be estimated from a shape of the obstacle, and the color of the headlamps may be switched according to a result of estimation. In other words, if the obstacle is estimated to be an ordinary vehicle, the color of the headlamps may be switched to green. If an obstacle is estimated to be a motorcycle, the color of the headlamps may be switched to yellow. If the obstacle is estimated to be a human, the color of the headlamps may be switched to red.

Here, regarding how to estimate what the obstacle is, for example, templates that indicate shapes of the obstacle such as vehicles (four-wheel, and two-wheel) and pedestrians may be stored in the storage unit 18 and the obstacle may be identified by well-known pattern matching using the templates.

In addition, the color of only one of the headlamps may be switched.
When switching of the color of the headlamps is complete, the control unit 11 terminates the process.

### (12) Traveling location detection process

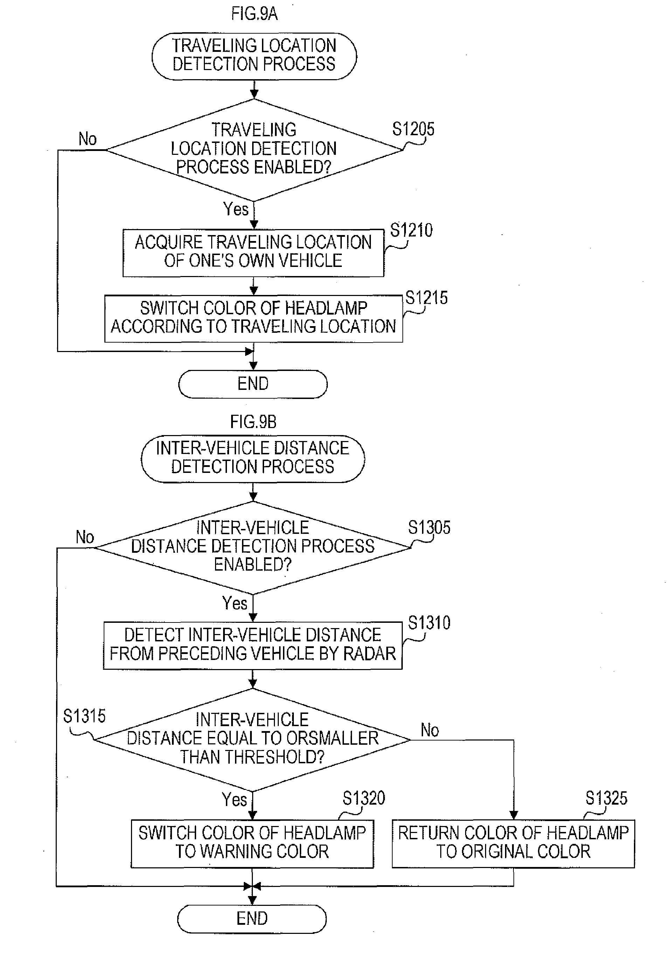

Next, a traveling location detection process will be described with reference to a flowchart of FIG. 9A. In the process, the color of the headlamps is switched according to a traveling location of one's own vehicle (for example, intersections, crossings, residential areas, cities, downtown, mountains, countryside, etc.) The present process is a process periodically executed while one's own vehicle is driven with the headlamps lit.

In S1205, the control unit 11 of the headlamp control apparatus 10 determines whether or not the traveling location detection process is enabled. If an affirmative determination is obtained (S1205: Yes), the process is moved to S1210. If a negative determination is obtained (S1205: No), the process is terminated.

In S1210, the control unit 11 acquires a current traveling location of one's own vehicle from a not shown navigation device via the in-vehicle LAN 30, and moves the process to S1215.
In S1215, the control unit 11 makes a color switching request to switch the color of the headlamps to a color according to the travel location of one's own vehicle.

Specifically, for example, when the traveling location of one's own vehicle is a place where an accident is easy to occur such as intersections, crossings, downtown or the like, the color of the headlamps may be set to a warning color (yellow, for example). Further, in a case where the traveling location of one's own vehicle is a residential area, the color of the headlamps may be a soft tone. When the traveling location is mountains or a country, the color of the headlamps may be a vivid tone.

In addition, the color of only one of the headlamps may be switched.
When switching of the color of the headlamps is complete, the control unit 11 terminates the process.

### (13) Inter-vehicle distance detection process

Next, an inter-vehicle distance detection process will be described with reference to a flowchart of FIG. 9B. In the process, the color of the headlamps of one's own vehicle is switched according to a distance between one's own vehicle and a preceding vehicle that travels ahead of one's own vehicle. The present process is a process periodically executed while one's own vehicle is driven with the headlamps lit.

In S1305, the control unit 11 of the headlamp control apparatus 10 determines whether or not the inter-vehicle distance detection process is enabled. When an affirmative determination is obtained (S1305: Yes), the process is moved to S1310. If a negative determination is obtained (S1305: No), the process is terminated.

In S1310, the control unit 11 detects an inter-vehicle distance from the preceding vehicle by the radar 14, and moves the process to S1315.
In S1315, the control unit 11 determines whether or not the inter-vehicle distance from the preceding vehicle is less than a predetermined threshold (5m, for example). If an affirmative determination is obtained (S1315: Yes), the process is moved to S1320. If a negative determination is obtained (S1315: No), the process is moved to S1325.

In S1320, the control unit 11 makes a color switching request to switch the color of the headlamps to a warning color (yellow, for example). At this time, the color of only one of the headlamps may be switched. Then, the control unit 11 terminates the present process.

On the other hand, in S1325, the control unit 11 make a color switching request to return the color of the headlamps to the original color (white, for example) from the warning color, and then ends the process.
The above-mentioned threshold may be provided in plural, and the color of the headlamps may be changed in multiple stages depending on the inter-vehicle distance.

In addition, when the inter-vehicle distance is equal to or less than a predetermined value in the same manner, even with the headlamps turned off, the control unit 11 may make the lighting device 20 turn on the headlamps in a state in which the color of the light to be emitted is set to a warning color. It should be noted that this process may be performed only for one headlamp.

### (14) Number of passenger detection process

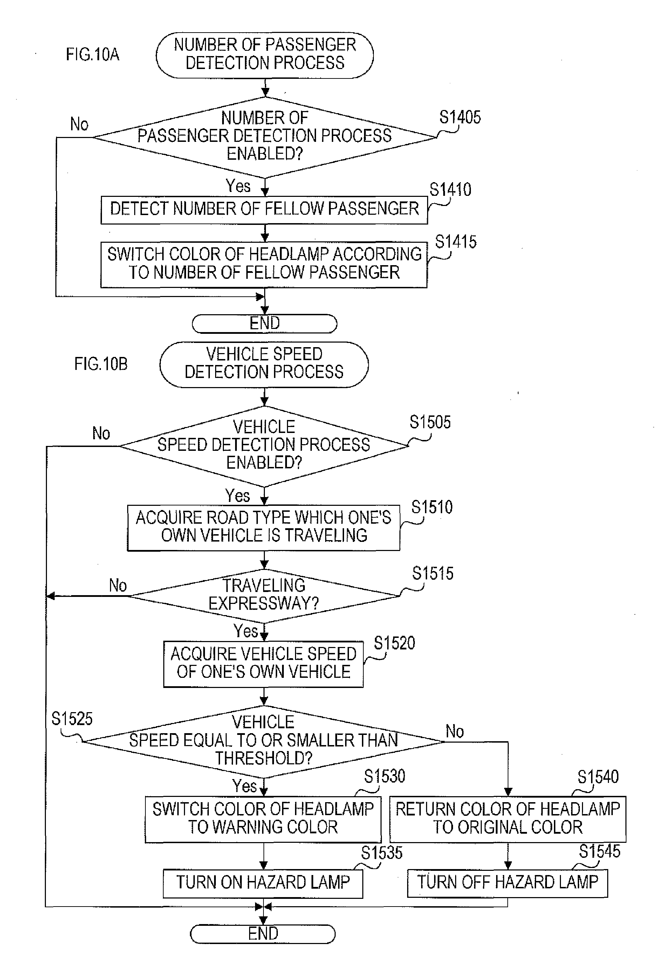

Next, a number of passenger detection process will be described with reference to a flowchart of FIG. 10A. In the process, the color of the headlamps is switched according to a number of passengers in one's own vehicle. The present process is a process periodically executed while one's own vehicle is driven with the headlamps lit.

In S1405, the control unit 11 of the headlamp control apparatus 10 determines whether or not the number of passenger detection process is enabled. If an affirmative determination is obtained (S1405: Yes), the process is moved to S1410. If a negative determination is obtained (S1405: No), the process is terminated.

In S1410, the control unit 11 is notified of presence or absence of a person seated on a seat from a passenger sensing device provided in each seat through the in-vehicle LAN 30, and detects the number of passengers in the vehicle based on the notification. Then, the process is moved to S1415.

In S1415, the control unit 11 makes a color switching request to switch the color of the headlamps to a color depending on the number of passengers. Specifically, for example, the color of the headlamps may be set to blue when the number of passengers is zero (0) (when only a driver is on the vehicle), and the color of the headlamps may be set to white when the number of passengers is at least one person. In addition, the color of only one of the headlamps may be switched. When switching of the color of the headlamps is complete, the control unit 11 terminates the process.

### (15) Vehicle speed detection process

Next, a speed detection process will be described with reference to a flowchart of FIG. 10B. In the process, the color of the headlamps is switched according to a speed of one's own vehicle. The present process is a process periodically executed while one's own vehicle is driven with the headlamps lit.

In S1505, the control unit 11 of the headlamp control apparatus 10 determines whether or not the speed detection process is enabled. When an affirmative determination is obtained (S1505: Yes), the process is moved to S1510. When a negative determination is obtained (S1505: No), the present process is terminated.

In S1510, the control unit 11 acquires a type of road one's own vehicle is traveling from a not shown navigation device via the in-vehicle LAN 30, and moves the process to S1515.
In S1515, the control unit 11 determines whether or not one's own vehicle is traveling an expressway. When an affirmative determination is obtained (S1515: Yes), the process is moved to S1520. When a negative determination is obtained (S1515: No), the process is terminated.

In S1520, the control unit 11 acquires the speed of one's own vehicle via the in-vehicle LAN 30, and moves the process to S1525.
In S1525, the control unit 11 determines whether or not the vehicle speed of one's own vehicle is equal to or less than a predetermined threshold (10 km/h, for example). Then, if an affirmative determination is obtained (S1525: Yes), the process is moved to S1530. When a negative determination is obtained (S1525: No), the process moves to S1540.

In S1530, the control unit 11 makes a color switching request to switch the color of the headlamps to a warning color (yellow, for example). At this time, the color of only one of the headlamps may be switched. Then, the control unit 11 moves the process to S1535.

In S1535, the control unit 11 commands the hazard lamp 40 to start flashing a hazard lamp via the in-vehicle LAN 30, and terminates the process.
On the other hand, in S1540, the control unit 11 makes a color switching request to return the color of the headlamps to the original color (white, for example) from the warning color, and moves the process to S1545.

In S1545, the control unit 11 commands the hazard lamp 40 to stop flashing the hazard lamp via the in-vehicle LAN 30, and terminates the process.

### [Second Embodiment]

### [Description of Configuration]

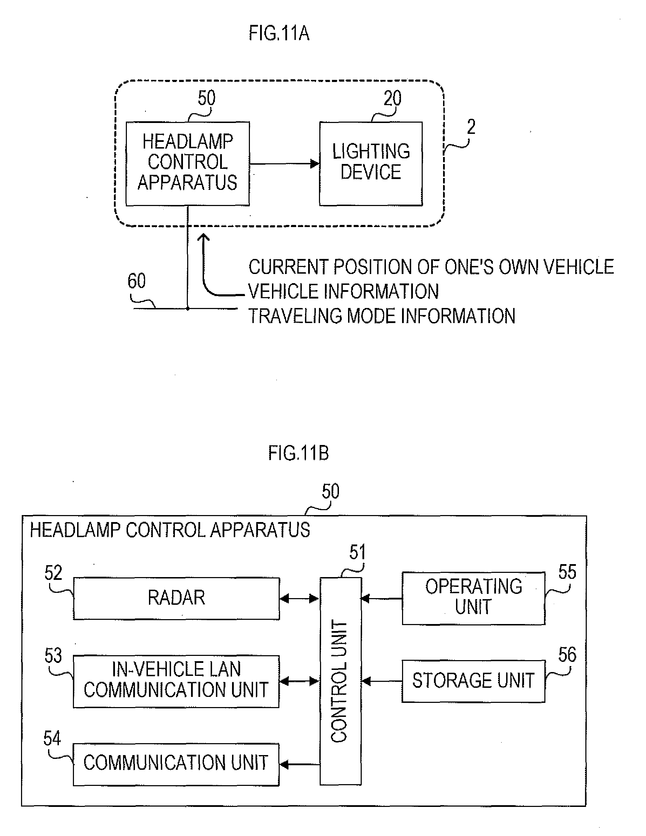

Next, the headlamp system 2 mounted on a railway vehicle provided with a driver's cabin of a second embodiment will be described with reference to a block diagram according to FIG. 11A. The headlamp system 2 is provided with the same lighting device 20 as the lighting device 20 of the first embodiment that irradiates light ahead of one's own vehicle from each end in the width direction of the front of one's own vehicle, and a headlamp control apparatus 50 that controls on and off of the lighting device 20, and colors and intensity of light to be irradiated.

Further, the headlamp control apparatus 50 is configured to be able to retrieve various information, via an in-vehicle LAN 60 provided on a each railway vehicle that forms a series of train including one's own vehicle, such as position information that indicates a current position of one's own vehicle, vehicle information that indicates a type and the like of each railway vehicle constituting the train, traveling mode information that indicates a traveling mode (express, fast, normal, deadhead, etc.) of one's own vehicle. According to these information, the headlamp control apparatus 50 controls the lighting device 20. In addition, an on-vehicle device that forms a known train position detection system that detects the current position of one's own vehicle is connected to the in-vehicle LAN 60. The position information is acquired from the on-vehicle device.

Further, as described in FIG. 11B, the headlamp control apparatus 50 is mainly constituted from a known microcomputer including a CPU, a ROM, a RAM, an I/O, and a bus line connecting the foregoing components, and so on. The headlamp control apparatus 50 includes a control unit 51 that comprehensively controls the headlamp control apparatus 50 in accordance with a program stored in the ROM, a known radar 52 that detects an obstacle ahead of one's own vehicle, an in-vehicle LAN communication unit 53 that communicates with various devices mounted on one's own vehicle through the in-vehicle LAN 60, a communication unit 54 that communicates with the lighting device 20, an operating unit 55 that accepts various operations from the user, and a storage unit 56 constituted from a device that does not require memory holding operation such as a HDD or flash memory and can store various types of information.

In addition, the radar 52 is constituted from an antenna that has directivity and performs transmission of radio waves forward of one's own vehicle and receipt of reflected waves of the radio waves, a transmission unit that modulates signals and transmits the modulated signals from the antenna, a receiving unit that demodulates the reflected wave received by the antenna, a signal processing unit that detects a distance and positional relationship between one's own vehicle and an obstacle ahead of one's own vehicle, a shape of the obstacle and so on from the signals demodulated by the receiving unit.

Further, the storage unit 56 stores traveling schedule information indicating a scheduled traveling route of one's own vehicle, a location of a station on the traveling route, a station at which one's own vehicle is to stop, and estimated time to reach the station, etc.

### (1) Station passing process

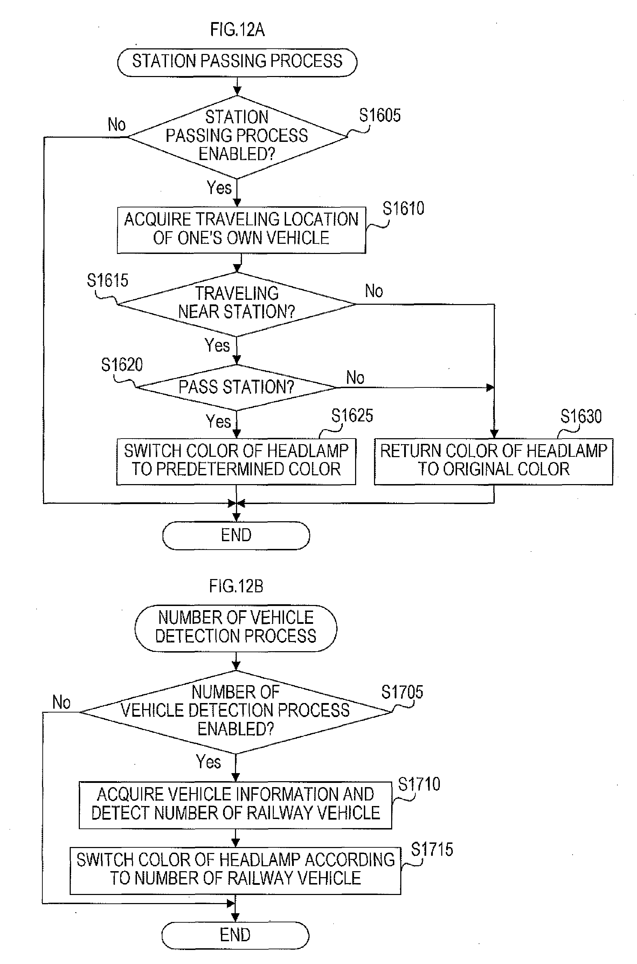

First, a station passing process will be described with reference to a flowchart of FIG. 12A. In the process, the color of the headlamps is switched when one's own vehicle passes a station. The present process is a process periodically executed while one's own vehicle is driven with the headlamps lit.

In S1605, the control unit 51 of the headlamp control apparatus 50 determines whether or not the station passing process is enabled. When an affirmative determination is obtained (S1605: Yes), the process is moved to S1610. When a negative determination is obtained (S1605: No), the present process is terminated.

In S1610, the control unit 51 acquires position information indicating the current position of the vehicle from the above described on-vehicle device through the in-vehicle LAN 60, and moves the process to S1615. In S1615, the control unit 51 determines whether or not the current position of one's own vehicle is near the station (for example, within 500 m from the station). Then, if an affirmative determination is obtained (S1615: Yes), the process is moved to S1620. If a negative determination is obtained (S1615: No), the process is moved to S1630.

In S1620, based on the operation schedule information that is stored in the storage unit 56, the control unit 51 determines whether or not the vehicle passes the station. Then, if an affirmative determination is obtained (S1620: Yes), the process is moved to S1625. If a negative determination is obtained (S1620: No), the process is moved to S1630.

In S1625, the control unit 51 makes a color switching request to switch the color of the headlamps to a predetermined color (yellow, for example). At this time, the color of only one of the headlamps may be switched. Then, the control unit 51 terminates the process.

On the other hand, in S1630, the control unit 51 makes a color switching request to return the color of the headlamps to the original color (white, for example) from the predetermined color, and terminates the process.
It is also possible to apply the station passing process to the headlamp system 2 mounted on a bus, for example. In such case, it is considered that the same process is carried out when one's own vehicle passes a bus stop.

Also, if one's own vehicle is traveling in a vicinity of a station to stop, the color of the headlamps may be switched to a predetermined color.

### (2) Number of vehicle detection process

Next, a number of vehicle detection process will be described with reference to a flowchart of FIG. 12B. In the process, the color of the headlamps is switched according to a number of a series of railway vehicles forming a train including one's own vehicle. The present process is a process periodically executed while one's own vehicle is driven with the headlamps lit.

In S1705, the control unit 51 of the headlamp control apparatus 50 determines whether or not a number of vehicle detection process is enabled. If an affirmative determination is obtained (S1705: Yes), the process is moved to S1710. If a negative determination is obtained (S1705: No), the process is terminated.

In S1710, the control unit 51 acquires the vehicle information indicating a type of the railway vehicle, etc. from other railway vehicle forming the train through the in-vehicle LAN 60, detects the number of railway vehicles forming the train based on the vehicle information. Then, the process is moved to S1715.

In S1715, the control unit 51 makes a color switching request to switch the color of the headlamps to a color depending on the number of railway vehicles. In particular, for example, the color of the headlamps may be set to white when the number of railway vehicles is one, and redness in the color of the headlamps may be made stronger in accordance with an increase in the number of railway vehicles. When switching of the color of the headlamps is complete, the control unit 51 terminates the process.

### (3) Boarding propriety determination process

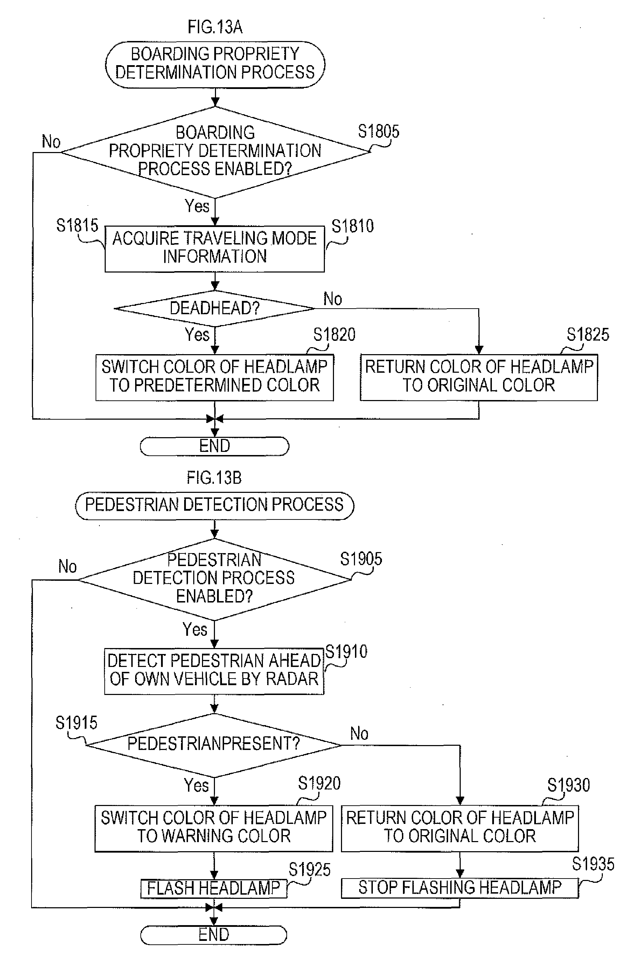

Next, a boarding propriety determination process will be described with reference to a flowchart of FIG. 13A. In the process, the color of the headlamps is switched depending on whether not boarding to a passenger train including one's own vehicle is permitted. The present process is a process periodically executed while one's own vehicle is driven with the headlamps lit.

In S1805, the control unit 51 of the headlamp control apparatus 50 determines whether or not boarding propriety determination process is enabled. If an affirmative determination is obtained (S1805: Yes), the process is moved to S1810. If a negative determination is obtained (S1805: No), the process is terminated.

In S1810, the control unit 51 acquires the traveling mode information indicating the traveling mode (express, fast, normal, deadhead, etc.) of the vehicle through the in-vehicle LAN 60, and moves the process to S1815.
In S1815, the control unit 51 determines whether or not the passenger train including one's own vehicle is a deadhead train based on the traveling mode information. Then, if an affirmative determination is obtained (S1815: Yes), the process is moved to S1820. If a negative determination is obtained (S1815: No), the process is moved to S1825.

In S1820, the control unit 51 makes a color switching request to switch the color of the headlamps to a predetermined color (for example, blue). At this time, the color of only one of the headlamps may be switched. Then, the control unit 51 terminates the process.

On the other hand, in S1825, the control unit 51 makes a color switching request to return the color of the headlamps to the original color (white, for example) from the predetermined color, and terminates the process.
The boarding propriety determination process can be also applied to the headlamp system 2 mounted on a bus, for example.

### (4) Pedestrian detection process

Next, a pedestrian detection process will be described with reference to a flowchart of FIG. 13B. In the process, the color of the headlamps is switched according to presence or absence of a pedestrian in a trajectory ahead of one's own vehicle. The present process is a process periodically executed while one's own vehicle is driven with the headlamps lit.

In S1905, the control unit 51 of the headlamp control apparatus 50 determines whether or not the pedestrian detection process is enabled. If an affirmative determination is obtained (S1905: Yes), the process is moved to S1910. If a negative determination is obtained (S1905: No), the process is terminated.

In S1910, the control unit 51 detects a pedestrian who is in the trajectory ahead of one's own vehicle by the radar 52, and moves the process to S1915.
In S1915, the control unit 51 determines presence or absence of a pedestrian in the trajectory ahead of one's own vehicle. Then, if an affirmative determination is obtained (S1915: Yes), the process is moved to S1920. If a negative determination is obtained (S1915: No), the process is moved to S1930.

In S1920, the control unit 51 makes a color switching request to switch the color of the headlamps to a warning color (red, for example). At this time, the color of only one of the headlamps may be switched. Then, the control unit 51 moves the process to S1925.

In S1925, the control unit 51 communicates with the light emission unit 21 of the lighting device 20 via the communication unit 54, commands the light emission unit 21 to flash the headlamps to be switched to the warning color, and terminates the process.
On the other hand, in S1930, the control unit 51 makes a color switching request to return the color of the headlamps to the original color (white, for example) from the warning color, and moves the process to S1935.

In S1935, the control unit 51 communicates with the light emission control unit 21 of the lighting device 20 via the communication unit 54, terminates flashing of the headlamps, commands the light emission control unit 21 to restart lighting of the headlamps, and terminates the process.

### [Third Embodiment]

### [Description of Configuration]

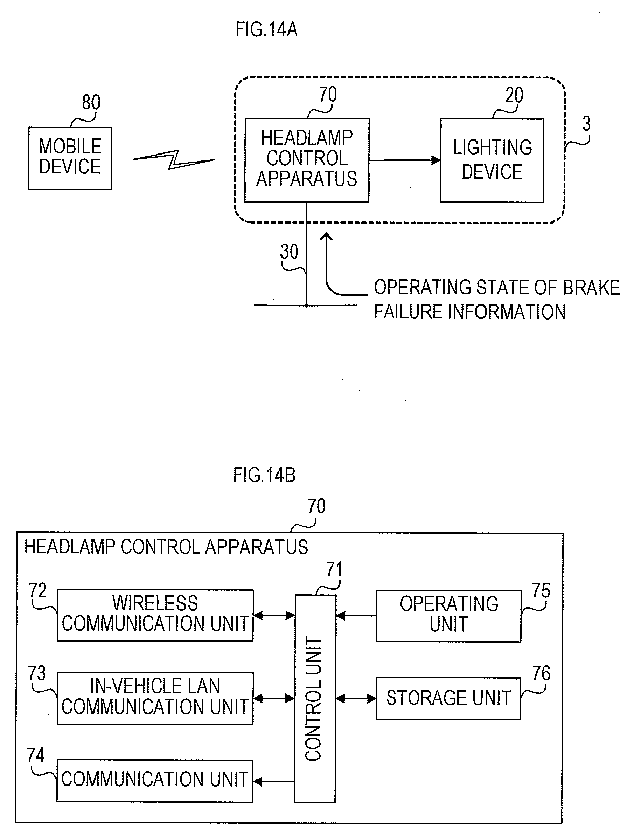

Next, a headlamp system 3 of a third embodiment mounted in an automobile will be described with reference to a block diagram according to FIG. 14A. The headlamp system 3 is provided with the same lighting device 20 as the lighting device 20 of the first embodiment, and a headlamp control apparatus 70 that controls on, off or flashing of the lighting device 20 and the color and intensity of light to be irradiated.

In addition, the headlamp control apparatus 70 is configured to be able to acquire various information such as an operating state of a brake of one's own vehicle (in particular, for example, brake hydraulic pressure of a master cylinder of a hydraulic brake, depression force of a brake pedal, etc.), failure information, and so on, through the in-vehicle LAN 30, to control the lighting device 20 in accordance with the information.

Further, as described in FIG. 14B, the headlamp control apparatus 70 is mainly constituted from a known microcomputer including a CPU, a ROM, a RAM, an I/O, a bus line connecting these, and so on. The headlamp control apparatus 70 includes a control unit 71 that comprehensively controls the headlamp control apparatus 70 in accordance with a program stored in the ROM, a wireless communication unit 72 that performs wireless communication with a mobile device 80 such as mobile phone, PDA, or the like in possession of a driver sitting in the driver seat, an in-vehicle LAN communication unit 73 that communicate with various devices mounted on one's own vehicle through the in-vehicle LAN 30, a communication unit 74 that communicates with the lighting device 20, an operating unit 75 that accepts various operations from the user, and a storage unit 76 that is constituted from a device that does not require memory holding operation such as a HDD or flash memory and can store various types of information.

In addition, the wireless communication unit 72 is configured to periodically transmit signals to the mobile device 80 regarding an area where the driver seat is located and areas in its vicinity as a communication range, and receive signals indicating various types of information as response signals from the mobile device 80 present in the area. Further, the storage unit 76 stores identification information indicating a person who is registered as a driver to drive one's own vehicle.

### [Description of Operation]

In the headlamp control apparatus 70 of the third embodiment, as in the first embodiment, the control unit 71 is configured to communicate with the light emission control unit 21 of the lighting device 20 via the communication unit 74, and make a color switching request to switch the color of the right headlamp 22 or the left headlamp 23. The headlamp control apparatus 70 is configured to be able to perform a process to switch the color of the headlamps in accordance with a state of one's own vehicle and the driver, etc. Whether or not to enable each operation can be selected by the user. The contents of these processes will be described below in detail.

### (1) Brake interlocking process

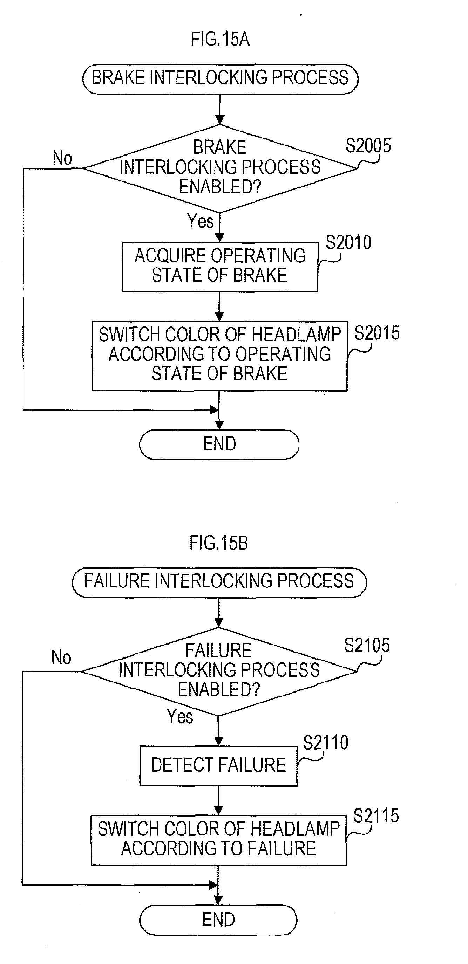

First, a brake interlocking process will be described with reference to a flowchart of FIG. 15A. In the process, the color of the headlamps of one's own vehicle is switched according to an operating state of a brake of one's own vehicle. The present process is a process periodically executed while one's own vehicle is driven with the headlamps lit.

In S2005, the control unit 71 of the headlamp control apparatus 70 determines whether or not the brake interlocking process is enabled. When an affirmative determination is obtained (S2005: Yes), the process is moved to S2010. When a negative determination is obtained (S2005: No), the present process is terminated.

In S2010, the control unit 71 acquires the operating state of the brake through the in-vehicle LAN 30, and moves the process to S2015. In S2015, the control unit 71 makes a color switching request to switch the color of the headlamps to a color in accordance with the operating state of the brake.

In particular, for example, if the brake is in operation (in other words, if a brake lamp is lit), the color of the headlamps may be set to red. If the brake is not in operation, the color of the headlamps may be set to white. Also, for example, a braking state of the brake pedal may be classified into multiple stages in accordance with the operating state of the brake pedal and brake fluid pressure, a color corresponding to each stage may be defined, and the color of the headlamps may be switched to the color corresponding to the stage of the current braking state of the brake.

In addition, the color of only one of the headlamps may be switched.
When switching of the color of the headlamps is complete, the control unit 71 terminates the process.

### (2) Failure interlocking process

Next, a failure interlocking process will be described with reference to a flowchart of FIG. 15B. In the process, the color of the headlamps of one's own vehicle is switched according to failure information of one's own vehicle. The present process is a process periodically executed while one's own vehicle is driven with the headlamps lit.

In S2105, the control unit 71 of the headlamp control apparatus 70 determines whether or not the failure interlocking process is enabled. When an affirmative determination is obtained (S2105: Yes), the process is moved to S2110. When a negative determination is obtained (S2105: No), the present process is terminated.

In S2110, the control unit 71 detects failure of one's own vehicle by collecting the failure information through the in-vehicle LAN 30, and moves the process to S2115.
In S2115, the control unit 71 makes a color switching request to switch the color of the headlamps to a color in accordance with the detected failure.

Specifically, for example, if failure is detected, the color of the headlamps may be set to a warning color (yellow, for example). If failure is not detected, the color of the headlamps may be set to the original color (white, for example).
Further, for example, a color corresponding to each part of one's own vehicle, such as engine, meter, air conditioner and the like, may be set. If failure is detected, the color of the headlamps may be switched to the color corresponding to the part where failure has occurred. If failure is not detected, the color of the headlamps may be set to the original color.

Also, for example, a magnitude of effect given to driving by failure occurring in one's own vehicle may be determined due to a number and a type of failure that has been detected. The color of the headlamps may be switched to a color according to the magnitude.
In addition, the color of only one of the headlamps may be switched.

When switching of the color of the headlamps is complete, the control unit 71 terminates the process.

### (3) Driver identification process

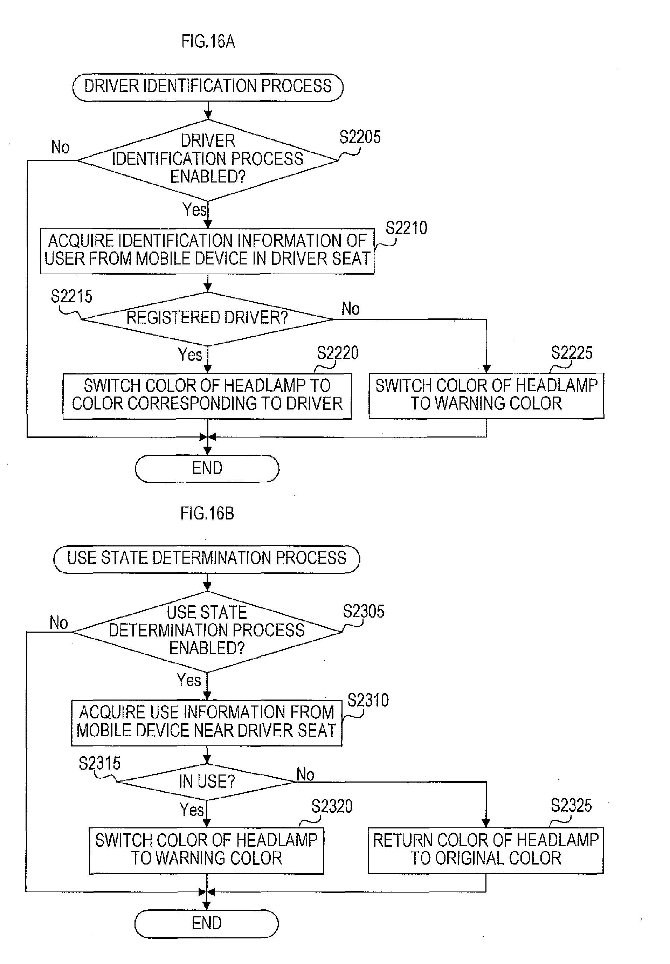

Next, a driver identification process will be described with reference to a flowchart of FIG. 16A. In the process, the color of the headlamps of one's own vehicle is switched depending on who drives one's own vehicle. The present process is a process periodically executed while one's own vehicle is driven with the headlamps lit.

In S2205, the control unit 71 of the headlamp control apparatus 70 determines whether or not the driver identification process is enabled. If an affirmative determination is obtained (S2205: Yes), the process is moved to S2210. When a negative determination is obtained (S2205: No), the present process is terminated.

In S2210, the control unit 71 performs wireless communication with the mobile device 80 present in the driver seat through the wireless communication unit 72 to acquire identification information indicating a user of the mobile device 80, and moves the process to S2215.

In S2215, the control unit 71 determines whether or not to the acquired identification matches the registered driver information. When an affirmative determination is obtained (S2215: Yes), the process is moved to S2220. When a negative determination is obtained (S2215: No), the process is moved to S2225. Even if acquisition of the identification information fails, the process is moved to S2225.

In S2220, the control unit 71 makes a color switching request to switch the color of the headlamps to a color that is set for the driver corresponding to the acquired identification information, and then terminates the present process.
On the other hand, in S2225, the control unit 71 makes a color switching request to switch the color of the headlamps to a warning color (yellow, for example), and then terminates the present process.

### (4) Use state determination process

Next, a use state determination process will be described with reference to a flowchart of FIG. 16B. In the process, the color of the headlamps of one's own vehicle is switched in accordance with a use state of the mobile device 80, etc. present in the driver seat. The present process is a process periodically executed while one's own vehicle is driven with the headlamps lit.

In S2305, the control unit 71 of the headlamp control apparatus 70 determines whether or not the use state determination process is enabled. If an affirmative determination is obtained (S2305: Yes), the process is moved to S2310. If a negative determination is obtained (S2305: No), the process is terminated.

In S2310, the control unit 71 performs wireless communication with the mobile device 80 present in the driver seat through the wireless communication unit 72 to acquire use state information indicating the use state of the mobile device 80, and moves the process to S2215.

Examples of the use state of the mobile device 80 may be presence or absence of a call, whether or not the call is carried out by the hands-free device, and so on, in a case where the mobile device 80 is configured as a mobile phone. Other than the above, whether or not an email message is being composed or viewed, whether or not the web is being viewed, presence or absence of operation for the mobile device 80, etc. can be the examples.

In S2315, the control unit 71 determines whether or not the mobile device 80 is in use based on the acquired use state information. If a positive determination is obtained (S2315: Yes), the process is moved to S2320. If a negative determination is obtained (S2315: No), the process is moved to S2325.

In addition, if the use state information cannot be obtained, it is considered that the mobile device 80 is not in use, and the process is moved to S2325. Also if the call is being made by a hands-free device, it is considered that there is low risk of accident although the mobile device 80 is in use. The process is moved to S2325.

In S2320, the control unit 71 makes a color switching request to switch the color of the headlamps to a warning color (red for example), and then terminates the present process.
On the other hand, in S2325, the control unit 71 makes a color switching request to switch the color of the headlamps to the original color, and then terminates the present process.

In the use state determination process, whether or not the driver is using the mobile device 80 is determined by wireless communication with the mobile device 80. For example, whether or not the mobile device 80 is in use may be determined based on an image of the driver that has been captured by a camera.

### (5) Visibility enhancement process

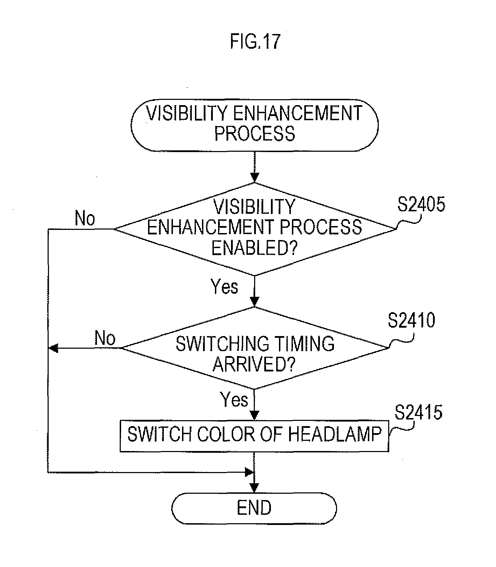

Next, a visibility enhancement process will be described with reference to a flowchart in FIG. 17. In the process, visibility ahead of one's own vehicle is improved by changing the color of the headlamps. The present process is a process periodically executed while one's own vehicle is driven with the headlamps lit.

In S2405, the control unit 11 of the headlamp control apparatus 10 determines whether or not the visibility enhancement process is enabled. When an affirmative determination is obtained (S2405: Yes), the process is moved to S2410. When a negative determination is obtained (S2405: No), the present process is terminated.

In S2410, the control unit 11 determines whether or not a switching timing has come. If an affirmative determination is obtained (S2410: Yes), the process is moved to S2415. If a negative determination is obtained (S2410: No), the present process is terminated. It may be assumed that the switching timing has come when a predetermined time (for example, about 10 to 500 ms) has elapsed after previous switching of the color of the headlamps.

In S2415, the control unit 11 makes a color switching request so as to cause the color of the left and right headlamps to switch to one of predetermined setting colors (e.g., red, blue, yellow, green, white, and so on). In particular, for example, a switching order to switch the color may be determined in advance, like from red to blue, to yellow, to green, and then to white, and the color of the headlamps may be switched cyclically according to the order. Also, for example, in a case where five setting colors exist, a period during which the switching timing arrives six times may be set as one cycle. As long as all the setting colors are selected in each cycle, each setting color may be randomly selected.

When switching of the color of the light of the headlamps is complete, the control unit 11 terminates the process.

### [Effect]

According to the headlamp control apparatus 10 of the first embodiment, the color of the headlamps periodically changes and a stimulus can be continuously given to the eyes of the driver during driving of one's own vehicle, by enabling the drowsiness suppression process. Therefore, even if the driver becomes drowsy, the driver can be awakened at an early stage.

Further, by enabling the weather determination process, time zone determination process, oncoming vehicle handling process, and object handling process, the color of the headlamps can be switched to an optimum color according to the situation around one's own vehicle. It is further possible to improve visibility ahead of one's own vehicle, and to cause pedestrians and drivers of other vehicles around one's own vehicle to easily recognize one's own vehicle. Therefore, it is possible to drive one's own vehicle safely.

Further, by enabling the horn interlocking process, the color of the headlamps can be switched in accordance with the operation of the horn. Without dazzling the drivers of other vehicles around one's own vehicle, warning can be given more reliably through both ears and eyes.

Further, by enabling the accelerator interlocking process, the color of the headlamps can be changed in accordance with the operating state of the accelerator. It becomes easy to sense the speed and acceleration state of one's own vehicle from outside the vehicle.
Further, in a case where one's own vehicle is configured as an electric vehicle, the color of the headlamps can be changed depending on the remaining amount of the battery by enabling the remaining battery notification process. Therefore, the remaining amount of the battery of one's own vehicle can be determined from outside the vehicle. It is possible to more reliably give warning on low battery.

Further, by enabling the passing process, the color of the headlamps can be switched in accordance with the operation of the passing switch. Without dazzling pedestrians and drivers of other vehicles ahead of one's own vehicle, communication can be made with those persons.

Further, by enabling the following vehicle detection process, the color of the headlamps can be changed depending on the number of the following vehicles. Presence or absence and the number of the following vehicles can be informed to the driver of the oncoming vehicle. Therefore, the driver of the oncoming vehicle can be easily sense the situation of the opposite lane, and can drive in accordance with the situation of the opposite lane.

Further, by enabling the obstacle detection process, the color of the headlamps can be changed in accordance with presence or absence of obstacle ahead of the vehicle, a distance to the obstacle, and so on. Therefore, it is possible for the driver to more reliably sense presence or absence of an obstacle ahead of the vehicle, and the distance to the obstacle.

Further, by enabling the traveling location detection process, for example, upon traveling a location where traffic accidents is easy to occur, such as intersections, crossings and downtown, etc., the color of the headlamps can be changed to a warning color. Without dazzling those who are around one's own vehicle, it is possible to give warning to pedestrian or the like around one's own vehicle, and inhibit occurrence of accidents.

In addition, by enabling the inter-vehicle distance detection process, it is possible to give warning to the driver of the preceding vehicle traveling ahead when one's own vehicle approaches the preceding vehicle.
Further, by enabling the number of passenger detection process, the number of persons who are boarding on one's own vehicle can be easily sensed from outside. Strict control is facilitated over a vehicle traveling a fellow passenger priority lane, where an automobile with a fellow passenger can preferentially travel, without a fellow passenger.

Further, by enabling the vehicle speed detection process, it is possible to automatically start flashing a hazard lamp and change the color of the headlamps, when the vehicle is stopped in an expressway by congestion. Drivers of vehicles near one's own vehicle can be more reliably warned.

According to the headlamp control apparatus 50 of the second embodiment, it is possible to notify passengers at a station whether or not a train to be able to board will arrive, by enabling the station passing process. Increase in convenience can be achieved.

Further, by enabling the number of vehicle detection process, it is possible for pedestrians and drivers of vehicles waiting for passage of a train at a crossing to sense waiting time at the crossing based on the color of the headlamps. The pedestrians, etc., can bypass the crossing depending on the waiting time.

Also, by enabling the boarding propriety determination process, it is possible for passengers to sense whether or not boarding one's own vehicle is possible.
Further, by enabling the pedestrian detection process, when pedestrians are present ahead of one's own vehicle, the pedestrians and the driver of one's own vehicle can be warned without dazzling those who are ahead of one's own vehicle.

According to the headlamp control apparatus 70 of the third embodiment, by enabling the brake interlocking process, there is no necessity to provide a dedicated indicator lamp. Also, without inhibiting the original function of the headlamps, that is, to illuminate ahead of one's own vehicle, the operating state of the brake of one's own vehicle can be sensed from ahead of one's own vehicle.

In addition, by enabling the failure interlocking process, those other than the owner of the vehicle, those who do not make use of a vehicle, or the like, can easily notice that a failure has occurred. Therefore, even if the user or owner of the vehicle has overlooked failure, others may notice the failure and notify the owner, etc. of occurrence of the failure. It is possible to inhibit failure of the vehicle from being left for a long time.

Further, by enabling the driver identification process, it is possible to discover theft of the vehicle at an early stage since the driver can be identified from outside the vehicle. Further, since the color of the headlamps is changed to the color corresponding to the driver, it is possible to easily identify who the driver of the vehicle is. Enhanced convenience can be achieved.

In addition, by enabling the use state determination process, it is possible to understand that a call, an email, or the like through a mobile phone is performed by the driver, even from outside the vehicle. Pedestrians and other vehicles can be warned.

Further, by enabling the visibility enhancement process, the color of the headlamps is switched to one of the five setting colors in sequence at each cycle, one cycle being a few seconds at the longest. Even if a plurality of objects different in color and material exist ahead of one's own vehicle, it is possible for the timing at which visibility of these objects is improved to come in a short period. Therefore, it is possible to improve visibility of these objects substantially simultaneously. Thereby, whole visibility ahead of one's own vehicle can be improved.

### [Other Embodiments]

(1) In the lighting device 20 of the first to third embodiments, the color of the light emitted from the headlamps is switched by adjusting the lighting intensity of the red LED element, green LED element, and blue LED element. How to switch the color of the headlamps is not limited to this way. Specifically, for example, a plurality of filter members different in color may be provided. By switching the filter member that transmits light emitted from the light source of the headlamps, the color of the light emitted from the headlamps may be switched. Further, a plurality of light sources different in color of the emitted light may be provided. By switching these light sources, the color of the emitted light may be switched. Even in such cases, the same effect can be obtained.

(2) Further, the headlamp control apparatus 10 of the first embodiment is configured to switch the color of the headlamps according to the current weather and the time zone. The color of the headlamps may be switched according to combination of the weather and the time zone such as, for example, the weather is rain and the time zone is night, the weather is snow and the time zone is evening, and so on. In this way, it is possible to switch to the color of the headlamps to an appropriate color according to the situation around the vehicle. Visibility ahead of the vehicle can be enhanced. Pedestrians and drivers of other vehicles around one's own vehicle can easily recognize one's own vehicle.

(3) In the first embodiment, it is assumed that the headlamp system 1 is mounted on an automobile. The headlamp system 1 may be mounted on a vehicle like motorcycle, bicycle, or train, in the same way. Even if the above described processes such as the drowsiness suppression process, the weather determination process, etc. are carried out in these vehicles, the same effect can be obtained.

In a case where the headlamp system 1 is mounted on a train, it is conceivable that the color of the headlamps is switched in a similar manner according to an operating state of an operating unit that accepts an operation to increase a speed of the train in place of the operating state of the accelerator in the accelerator interlocking process.

In addition, the color of the headlamps may be switched in order to effectively inform those who are at a crossing or a train station of approaching of a train when the train is approaching the crossing and the train station. Alternatively, if it is detected that there is an obstacle such as a vehicle, person or the like on a track or a crossing ahead of the train, the color of the headlamps may be switched in order to effectively inform the obstacle about approaching of the train.

Needless to say, the headlamp system 1 may be mounted also on an electric motorcycle and electric power-assisted bicycle. In such case, the remaining amount of the battery of an electric motorcycle, etc. can be more reliably sensed by performing the remaining battery notification process.

(4) Further, in the first embodiment, the lighting device 20 in the headlamp system 1 is configured as a headlamp of an automobile. Instead of the headlamp, the lighting device 20 may also be configured as lighting attached to an outer surface of a body of an automobile, such as the front, side, rear, roof, etc. of the automobile. Likewise, in a case where the headlamp system 1 is mounted on a motorcycle, bicycle, train or the like, the lighting device 20 may also be configured as lighting attached to an outer surface of the vehicle. Even in such case, the same effect can be obtained.

(5) Moreover, in the second embodiment, the lighting device 20 in the headlamp system 2 is configured as a headlamp of a railway vehicle. The lighting device 20 may also be configured as lighting attached to an outer surface of a body, not a headlamp, of a railway vehicle, such as the front, side, rear, roof, etc. of the railway vehicle. Even in such case, the same effect can be obtained.

(6) Further, in the third embodiment, it has been assumed that the headlamp system 3 is mounted on an automobile. The similar headlamp system 3 may be mounted on a vehicle, such as a motorcycle, electric vehicle, electric motorcycle, bicycle, electric power-assisted bicycle, etc. Even if the above described processes such as the brake interlocking process are carried out in these vehicles, the same effect can be obtained.

Further, in the third embodiment, the lighting device 20 in the headlamp system 3 is configured as a headlamp of an automobile. Instead of the headlamp, the lighting device 20 may be configured as lighting attached to an outer surface of a body of an automobile such as the front, side, rear, roof, etc. of the automobile. Of course, also in a case where the headlamp system 3 is mounted on a motorcycle or the like, the lighting device 20 may also be configured as lighting attached to an outer surface of the vehicle. Even in such case, the same effect can be obtained.

### [Correspondence between terms in embodiments and terms in claims]

The control unit 11 of the headlamp control apparatus 10 corresponds to the color control unit as an example, the operating unit 17 corresponds to the command receiving unit as an example, the in-vehicle LAN communication unit 15 corresponds to the operation receiving unit as an example, and the radar 14 corresponds to the transmitting and receiving unit as an example.

In addition, the wiper corresponds to the removal device as an example, and the accelerator corresponds to the operating unit as an example.
Further, S110 and S115 in the drowsiness suppression process correspond to the periodic color switching process as an example.

In addition, S220 in the weather determination process corresponds to the process performed by the weather determining unit as an example, S240 corresponds to the weather color switching process as an example, and S255 corresponds to the process performed by the setting unit in claim 7 as an example.

Also, S310 of the time zone determination process corresponds to the process performed by the time zone determining unit in claim 8 or the process performed by the illuminance detecting unit and the process performed by the time zone determining unit in claim 9, as an example. In addition, S330 corresponds to the time zone color switching process as an example, and S345 corresponds to the process performed by the setting unit in claim 10 as an example.

In addition, S410 in the oncoming vehicle handling process corresponds to a process performed by the color detecting unit as an example, and S415 corresponds to the oncoming vehicle color switching process as an example.
In addition, the operation of the horn corresponds to the beep command as an example, S510 in the horn interlocking process corresponds to the process performed by the beep command detecting unit as an example, and S515 corresponds to the warning alarm color switching process as an example.

In addition, S610 in the accelerator interlocking process corresponds to the process performed by the operating state detecting unit as an example, and S615 corresponds to the operating state color switching process as an example.
In addition, S710 in the remaining battery notification process corresponds to the process performed by the remaining amount detecting unit as an example, and S715 corresponds to the battery remaining amount color switching process as an example.

In addition, S810 in the object handling process corresponds to the process performed by the object detecting unit as an example, and S815 corresponds to the object color switching process as an example.
Also, S915 in the passing process corresponds to the driver operation color switching process as an example.

In addition, S1010 in the following vehicle detection process corresponds to the process performed by the vehicle detecting unit as an example, and S1015 corresponds to the following vehicle color switching process as an example.
Further, S1110 and S1115 in the obstacle detection process correspond to the reflected wave color switching process as an example.

In addition, S1210 in the traveling location detection process corresponds to the process performed by the location detecting unit as an example, and S1215 corresponds to the traveling location color switching process as an example.
In addition, S1310 in the inter-vehicle distance detection process corresponds to the process performed by the inter-vehicle distance detecting unit as an example, and S1315 to S1325 correspond to the inter-vehicle distance color switching process as an example.

In addition, S1410 in the number of passenger detection process corresponds to the process performed by the number of person detecting unit as an example, and S1415 corresponds to the number of passenger color switching process as an example.
In addition, S1510 in the vehicle speed detection process corresponds to the process performed by the road type detecting unit as an example, S1535 and S1545 correspond to the process performed by the hazard lamp control unit as an example, S1520 and S1525 correspond to the process performed by the speed reduction detecting unit as an example, S1530 corresponds to the speed reduction color switching process as an example.

In addition, S1610 in the station passing process corresponds to the process performed by the location detecting unit as an example, S1615, S1625 and S1630 correspond to the traveling location color switching process as an example, and S1620 corresponds to the process performed by the boarding and alighting determining unit as an example.

In addition, S1710 in the number of vehicle detection process corresponds to the process performed by the number of vehicles detecting unit as an example, and S1715 corresponds to the number of vehicle color switching process as an example.
In addition, S1815 in the boarding propriety determination process corresponds to the process performed by the boarding propriety determining unit as an example, and S1820 and S1825 in the boarding propriety determination process corresponds to the boarding propriety color switching process as an example.

In addition, S1815 in the boarding propriety determination process corresponds to the process performed by the boarding propriety determining unit as an example, and S1820 and S1825 correspond to the boarding propriety color switching process as an example.
In addition, S1910 in the pedestrian detection process corresponds to the process performed by pedestrian detecting unit as an example, S1915, S1920 and S1930 correspond to the pedestrian color switching process as an example, and S1915, S1925 and S1935 correspond to the flashing state switching request process as an example.

In addition, S2010 in the brake interlocking process corresponds to the process performed by the operating state detecting unit as an example, and S2015 corresponds to the brake operating state color switching process as an example
In addition, S2110 in the failure interlocking process corresponds to the process performed by the failure detecting unit as an example, and S2115 corresponds to the failure color switching process as an example.

In addition, S2210 and S2215 in the driver identification process correspond to the process performed by the comparing unit as an example, and S2220 and S2225 correspond to the driver color switching process as an example.
In addition, S2310 and S2315 in the use state determination process correspond to the process performed by the use state determining unit as an example, and S2320 and S2325 correspond to the use state color switching process as an example.

In addition, S2410 and S2415 in the visibility enhancement process correspond to the setting color switching process as an example.

## Claims

1. A headlamp control apparatus that controls a headlamp that emits light ahead of one's own vehicle and can change a color of the light, the headlamp control apparatus comprising
a color control unit that makes a color switching request to switch the color of the light emitted from the headlamp.

2. The headlamp control apparatus according to claim 1, wherein the color control unit executes a periodic color switching process in which the color switching request is made each time a predetermined time elapses.

3. The headlamp control apparatus according to claim 2, wherein the predetermined time is equal to or more than five minutes.

4. The headlamp control apparatus according to claim 2 or 3, wherein the headlamp is provided at least one at each end in a vehicle width direction in front of one's own vehicle, and
wherein the color control unit executes the periodic color switching process individually for the headlamp provided at the each end.

5. The headlamp control apparatus according to claim 1, further comprising a weather determining unit that determines weather based on signals from a weather sensor provided in the apparatus,
wherein the color control unit executes a weather color switching process in which a color switching request is made to switch the color of the light of the headlamp to a corresponding color that corresponds to current weather determined by the weather determining unit.

6. The headlamp control apparatus according to claim 5, wherein the weather determining unit determines the weather in further based on an operating state of a removal device that removes raindrops attached to a window of one's own vehicle.

7. The headlamp control apparatus according to claim 5 or 6, further comprising a command receiving unit that receives a command from a user,
wherein the color control unit, in accordance with the command received from the user via the command receiving unit, executes a color setting process in which the color of the light of the headlamp is switched each time a predetermined elapses, and
wherein the headlamp control apparatus further comprises a setting unit that sets the current color of the headlamp as the corresponding color that corresponds to the current weather determined by the weather determining unit, in accordance with the command received from the user via the command receiving unit, during execution of the color setting process.

8. The headlamp control apparatus according to claim 1, further comprising a time zone determining unit that determines a current time zone by a clock function provided in the apparatus,
wherein the color control unit executes a time zone color switching process in which the color switching request is made to switch the color of the light of the headlamp to a corresponding color that corresponds to the current time zone determined by the time zone determining unit.

9. The headlamp control apparatus according to claim 1, further comprising:
an illuminance detecting unit that detects brightness around one's own vehicle by an illuminance sensor provided in the apparatus; and
a time zone determining unit that determines a current time zone based on the brightness around one's own vehicle detected by the illuminance detecting unit,
wherein the color control unit executes a time zone color switching process in which the color switching request is made to switch the color of the light of the headlamp to a corresponding color that corresponds to the current time zone determined by the time zone determining unit.

10. The headlamp control apparatus according to claim 8 or 9, further comprising a command receiving unit that receives a command from a user,
wherein the color control unit, in accordance with the command received from the user via the command receiving unit, executes a color setting process in which the color of the light of the headlamp is switched each time a predetermined time elapses, and
wherein the headlamp control apparatus further comprises a setting unit that sets the current color of the headlamp as the corresponding color that corresponds to the current time zone, in accordance with the command received from the user via the command receiving unit, during execution of the color setting process.

11. The headlamp control apparatus according to one of claims 5 to 10, wherein the headlamp is provided at least one at each end in a vehicle width direction in front of one's own vehicle, and
the corresponding color different from each other is set individually to the headlamp provided at the each end.

12. The headlamp control apparatus according to claim 1, further comprising a color detecting unit that detects a color of oncoming vehicle illumination light emitted from an oncoming vehicle of one's own vehicle,
wherein the color control unit executes an oncoming vehicle color switching process in which the color switching request is made to switch the color of the light of the headlamp to a different color from the color of the oncoming vehicle illumination light detected by the color detecting unit.

13. The headlamp control apparatus according to claim 12,
wherein the headlamp is provided at least one at each end in a vehicle width direction in front of one's own vehicle, and
the color switching request made in the oncoming vehicle color switching process is a request to switch the color of the light of the headlamp to a different color from the color of the oncoming vehicle illumination light, in a state in which the color of the light of the headlamp provided at the each end is different from each other.

14. The headlamp control apparatus according to claim 1, further comprising a beep command detecting unit that detects that a command to sound a warning alarm has been given,
wherein the color control unit executes a warning alarm color switching process in which the color switching request is made in accordance with detection of the beep command by the beep command detecting unit.

15. The headlamp control apparatus according to claim 1, further comprising an operating state detecting unit that detects an operating state of an operating unit that accepts an operation to increase a speed of one's own vehicle,
wherein the color control unit executes an operating state color switching process in which the color switching request is made to switch the color of the light of the headlamp to a color corresponding to the operating state detected by the operating state detecting unit.

16. The headlamp control apparatus according to claim 1,
wherein one's own vehicle is driven by a motor powered from a battery equipped therewith,
wherein the headlamp control apparatus further comprises a remaining amount detecting unit that detects a remaining amount of the battery, and
wherein the color control unit executes a battery remaining amount color switching process in which the color switching request is made to switch the color of the light of the headlamp to a color corresponding to the remaining amount detected by the remaining amount detecting unit.

17. The headlamp control apparatus according to claim 1, further comprising an object detecting that detects an object illuminated by the headlamp,
wherein the color control unit executes an object color switching process in which the color switching request is made to switch the color of the light of the headlamp to a color corresponding to the object detected by the object detecting unit.

18. The headlamp control apparatus according to claim 1, further comprising an operation receiving unit that receives an operation by a driver,
wherein the color control unit that executes a driver operation color switching process in which the color switching request is made in accordance with the operation received through the operation receiving unit.

19. The headlamp control apparatus according to claim 1, further comprising a vehicle detecting unit that detects a following vehicle that is a vehicle located behind one's own vehicle,
wherein the color control unit executes a following vehicle color switching process in which the color switching request is made to switch the color of the light of the headlamp to a color corresponding to a result of detection by the vehicle detecting unit.

20. The headlamp control apparatus according to claim 1, further comprising a transmitting and receiving unit that transmits electromagnetic wave ahead of one's own vehicle, and receives reflected wave of the transmitted electromagnetic wave,
wherein the color control unit executes a reflected wave color switching process in which the color switching request is made to switch the color of the light of the headlamp to a color corresponding to the reflected wave received by the transmitting and receiving unit.

21. The headlamp control apparatus according to one of claims 14 to 20,
wherein the headlamp is provided at least one at each end in a vehicle width direction in front of one's own vehicle, and
wherein the color switching request is a request to switch the color of the light of the headlamp provided at one end.

22. The headlamp control apparatus according to claim 1, further comprising a location detecting unit that detects a location one's own vehicle is traveling,
wherein the color control unit executes a traveling location color switching process in which the color switching request is made to switch the color of the light of the headlamp to a color corresponding to the location detected by the location detecting unit.

23. The headlamp control apparatus according to claim 22,
wherein one's own vehicle travels a predetermined traveling route and performs boarding and alighting of passengers at a predetermined boarding and alighting location provided on the traveling route,
wherein one's own vehicle further comprises a boarding and alighting determining unit that determines whether or not to perform boarding and alighting of passengers at the boarding and alighting location, and
wherein the color control unit, if, in a traveling location color switching process, a location one's own vehicle is traveling detected by the location detecting unit is at or near the boarding and alighting location, switches the color of the light of the headlamp in accordance with a result of determination on whether or not to perform boarding and alighting of passengers at the and alighting boarding location by the boarding and alighting determining unit.

24. The headlamp control apparatus according to claim 23,
wherein one's own vehicle is configured as a railway vehicle provided with a driver's cabin, and
wherein the boarding and alighting location is a station.

25. The headlamp control apparatus according to claim 1, further comprising an inter-vehicle distance detecting unit that detects an inter-vehicle distance from a vehicle traveling ahead of one's own vehicle,
wherein the color control unit executes an inter-vehicle distance color switching process in which the color switching request is made to switch the color of the light headlamp to a color corresponding to the inter-vehicle distance detected by the inter-vehicle distance detecting unit.

26. The headlamp control apparatus according to claim 1,
wherein one's own vehicle is configured as an automobile or motorcycle,
wherein the headlamp control apparatus further comprises
a road type detecting unit that detects a type of road that one's own vehicle is traveling,
a hazard lamp control unit that controls a hazard lamp of one's own vehicle, and
a speed reduction detecting unit that detects that a speed of one's own vehicle is less than a predetermined threshold,
wherein the color control unit, when an expressway is detected as the type of road by the road type detecting unit, and it is detected by the speed reduction detecting unit that the speed of the vehicle is less than the threshold, executes a speed reduction color switching process in which the color switch request is made to switch the color of the light of the headlamp, and
wherein the hazard lamp control unit, when an expressway is detected as the type of road by the road type detecting unit, and it is detected by the speed reduction detecting unit that the speed of the vehicle is less than the threshold, causes the hazard lamp to start flashing.

27. The headlamp control apparatus according to claim 1, further comprising a number of person detecting unit that detects a number of persons boarding on one's own vehicle,
wherein the color control unit executes a number of passenger color switching process in which the color switching request is made to switch the color of the light of the headlamp to a color corresponding to the number of persons detected by the number of person detecting unit.

28. The headlamp control apparatus according to claim 1,
wherein one's own vehicle is configured as a railway vehicle provided with a driver's cabin,
wherein the headlamp control apparatus further comprises a number of vehicles detecting unit that detects a number of a series of railway vehicles that constitutes a train including one's own vehicle, and
wherein the color control unit executes a number of vehicle color switching process in which the color switching request is made to switch the color of the light of the headlamp to a color corresponding to the number of railway vehicles detected by the number of vehicles detecting unit.

29. The headlamp control apparatus according to claim 1,
wherein one's own vehicle is configured to travel a predetermined traveling route and perform boarding and alighting of passengers at a boarding and alighting location provided on the traveling route,
wherein the headlamp control apparatus further comprises a boarding propriety determining unit that determines whether or not boarding on one's own vehicle is permissible, and
wherein the color control unit executes a boarding propriety color switching process in which the color switching request is made to switch the color of the light of the headlamp to a color corresponding to propriety of boarding to one's own vehicle determined by the boarding propriety determining unit.

30. The headlamp control apparatus according to claim 1,
wherein one's own vehicle is configured as a railway vehicle provided with a driver's cabin,
wherein the headlamp control apparatus further comprises a pedestrian detecting unit that detects a pedestrian on a track ahead of one's own vehicle, and
wherein the color control unit executes a pedestrian color switching process in which the color switching request is made to switch the color of the light of the headlamp to a color corresponding to presence or absence of a pedestrian detected by the pedestrian detecting unit.

31. The headlamp control apparatus according to claim 30,
wherein the headlamp is configured to be able to flash, and
wherein the color control unit further makes a flashing state switching request to switch a flashing state of the headlamp according to presence or absence of a pedestrian detected by the pedestrian detecting unit.

32. The headlamp control apparatus according to claim 1, further comprising an operating state detecting unit that detects an operating state of a brake of one's own vehicle,
wherein the color control unit executes a brake operating state color switching process in which the color switching request is made to switch the color of the light of the headlamp to a color corresponding to the operating state of the brake detected by the operating state detecting unit.

33. The headlamp control apparatus according to claim 1, further comprising a failure detecting unit that detects failure of one's own vehicle,
wherein the color control unit executes a failure color switching process in which the color switching request is made to switch the color of the light of the headlamp to a color corresponding to the failure of one's own vehicle detected by the failure detecting unit.

34. The headlamp control apparatus according to claim 1, further comprising a comparing unit that acquires identification information of a user from a mobile device in a vicinity of a driver seat by wireless communication and compares the identification information with identification information indicating a person who has been pre-registered as a driver of one's own vehicle,
wherein the color control unit executes a driver color switching process in which the color switching request is made to switch the color of the light of the headlamp to a color corresponding to a result of comparison by the comparing unit.

35. The headlamp control apparatus according to claim 1, further comprising a use state determining unit that determines a use state of a mobile device by a driver,
wherein the color control unit executes a use state color switching process in which the color switching request is made to switch the color of the light of the headlamp to a color corresponding to a result of determination by the use state determining unit.

36. The headlamp control apparatus according to claim 1,
wherein a plurality of setting colors are predetermined as the color of the light of the headlamp, and
wherein the color control unit executes a setting color switching process in which one of the setting colors is selected in sequence each time a predetermined timing arrives, and the color switching request is made to switch the color of the light of the headlamp to the selected setting color.
